# FASCICULE DE BREVET EUROPEEN

(11) **EP 1 951 789 B1**
(45) Date de publication et mention de la délivrance du brevet: **17.06.2009**
(21) Numéro de dépôt: 06819705.2
(22) Date de dépôt: 23.11.2006
(51) Int. Cl.: C08G 69/18

(54) **COMPOSITION A BASE DE CAPROLACTAME, PROCEDE DE FABRICATION D'UN ELEMENT D'ETANCHEITE, ET RESERVOIR**
CAPROLACTAMZUSAMMENSETZUNG, VERFAHREN ZUR HERSTELLUNG EINES DICHTUNGSELEMENTS UND RESERVOIR
CAPROLACTAM COMPOSITION, METHOD FOR MAKING A SEALING ELEMENT, AND RESERVOIR

(30) Priorité: 24.11.2005 FR 0553585
(43) Date de publication de la demande: 06.08.2008
(73) Titulaire: COMMISSARIAT A L'ENERGIE ATOMIQUE, 75015 Paris (FR); L'AIR LIQUIDE, SOCIETE ANONYME POUR L'ETUDE ET L'EXPLOITATION DES PROCEDES GEORGES CLAUDE, 75007 Paris (FR)
(72) Inventeur: MAZABRAUD, Philippe, F-45000 Orleans (FR); CHAUVOT, Elodie, F-71210 Ecuisses (FR); DELNAUD, Laurent, F-37510 Ballan Mire (FR); BARRAL, Katia, F-78000 Versailles (FR)
(74) Mandataire: Ilgart, Jean-Christophe
(86) Numéro de dépôt international: PCT/EP2006/068816
(87) Numéro de publication internationale: WO 2007/060199

(56) Documents cités:
- FR-A- 1 385 729
- GB-A- 1 098 093
- GB-A- 1 349 324
- US-A- 3 017 391
- US-A- 3 200 095
- US-A1- 2002 188 067
- US-A1- 2003 175 457

## Description

### Domaine technique

La présente invention se rapporte à une composition utilisable pour fabriquer un élément d'étanchéité en polycaprolactame ou polyamide 6, par exemple pour fabriquer des enveloppes d'étanchéité aux fluides, en particulier aux gaz sous pression.

La présente invention se rapporte également à un procédé de fabrication d'une enveloppe d'étanchéité et à un réservoir susceptible d'être obtenu par ce procédé.

Les enveloppes d'étanchéité de la présente invention peuvent être utilisées par exemple pour la fabrication de réservoirs de type IV ou d'accumulateurs hydrauliques. Les réservoirs composites de type IV sont des réservoirs dans lesquels la pression des gaz stockés est généralement de 10⁶ à 10⁸ Pa. Leur structure est donc prévue d'une part pour être étanche aux gaz stockés et d'autre part pour supporter les pressions de stockage de ces gaz : elle comprend une enveloppe ou vessie interne d'étanchéité au gaz, appelée aussi « liner » (terme anglais), et une structure de renfort externe habituellement constituée de fibres de carbone et de résine thermodurcissable.

La présente invention trouve par exemple des applications dans la fabrication de piles à combustible basse température (par exemple à membrane échangeuse de protons ou « *proton exchange membrane fuel cell* » ou « PEMFC ») .

Dans la description ci-dessous, les références entre crochets ([ ]) renvoient à la liste des références présentée après les exemples.

### Etat de la technique

Les réservoirs de type IV ont été développés dans les années 1990, d'abord pour le stockage du gaz naturel avec des vessies en polyéthylène, et, plus récemment, à partir de 1997 essentiellement, pour le stockage de l'hydrogène.

Les vessies thermoplastiques actuellement utilisées sont en grande majorité constituées de polyéthylènes (PE) qui sont le plus souvent de haute densité (HDPE) et parfois réticulés (XHDPE). D'autres thermoplastiques de type polyamide (PA) (le plus souvent appelé « Nylon » (marque de commerce)) de type PA6, PA12 ou 11 sont également utilisés car ils présentent des propriétés barrières aux gaz intrinsèques meilleures que le polyéthylène. Enfin, d'autres types de thermoplastiques plus techniques peuvent être utilisés parce qu'ils présentent de bonnes propriétés barrières aux gaz, tels que le difluorure de polyvinylidène (PVDF) ou des solutions multicouches avec une couche barrière en copolymère éthylène-alcool vinylique (EVOH). Les documents [1] et [2] décrivent de tels thermoplastiques.

La plupart du temps, ces vessies sont obtenues par rotomoulage ou extrusion et/ou soufflage du matériau thermoplastique à l'état fondu. Ainsi, dans le document [3], il est mentionné que la vessie thermoplastique est obtenue par extrusion-soufflage ou rotomoulage, en utilisant de préférence un polyéthylène haute ou moyenne densité. Dans le document [4], des vessies d'étanchéité en polyéthylène, polypropylène ou polyamide sont obtenues par rotomoulage. Dans le document [5], il est précisé que la vessie en nylon 11 est réalisée par rotomoulage. Dans le document [6], il est mentionné que là vessie est obtenue à partir d'un matériau thermoplastique qui est extrudé, soufflé ou rotomoulé. Dans les documents [7] et [8], il est mentionné que la vessie thermoplastique peut être moulée par extrusion, soufflage ou par rotomoulage.

L'injection est rarement utilisée pour des limitations techniques et des questions de coût de presse et de moule. En effet, les vessies d'étanchéité peuvent faire jusqu'à 150 litres de volume interne, avec des épaisseurs de plusieurs centimètres. Le thermoformage est rarement utilisé, bien qu'il soit techniquement possible d'utiliser cette technologie pour réaliser de telles vessies d'étanchéité.

La technologie actuelle du rotomoulage de matériaux thermoplastiques en fusion présente un intérêt particulier. En effet, elle permet :
- de pouvoir fabriquer des pièces de grande dimension, allant jusqu'à 150 litres, voire au-delà ;
- de pouvoir insérer une ou plusieurs embase(s) (conduit de raccordement permettant de remplir la vessie de gaz et de la vider), et ceci, sans collages ultérieurs à la mise en oeuvre ; et
- de fournir des vessies d'étanchéité épaisses et homogènes.

Le site web [9] de l'Association Française de Rotomoulage (AFR) décrit un protocole de rotomoulage par fusion d'un matériau thermoplastique.

Dans tous ces procédés, le matériau thermoplastique est fondu pour être mis en forme à la géométrie de la vessie désirée, puis doit être refroidit avant d'être démoulé. De nombreux défauts de la vessie résultent de cette fusion, notamment la formation de réticulas, d'infondus, de microporosités, et d'oxydations du matériau thermoplastique. Ces défauts nuisent aux performances finales d'étanchéité de la vessie, et donc aux performances du réservoir. De plus, dans le cas du rotomoulage, même si le collage de l'embase à la vessie n'est pas nécessaire, l'étanchéité entre l'embase et la vessie n'est pas toujours satisfaisante, du fait de la fluidité du matériau thermoplastique en fusion qui est insuffisante pour épouser intimement les formes de l'embase. Par ailleurs, cette fluidité du matériau en fusion ne peut pas être augmentée par élévation de la température sans provoquer une altération chimique dudit matériau. En outre, les procédés utilisés prennent beaucoup de temps, prolongé encore par la durée de refroidissement du matériau après moulage de la vessie, due notamment à l'inertie du moule.

Le polyamide 6 (PA6), est le thermoplastique qui apparaît le plus intéressant pour la fabrication de vessies d'étanchéité, compte tenu du compromis entre ses propriétés barrières aux gaz, notamment hydrogène, et ses propriétés mécaniques sur une large plage de température allant de -40°C à +100°C. Malheureusement, le PA6 est mal adapté au rotomoulage, comme dans les autres technologies de moulage des matériaux thermoplastiques, car il nécessite d'être fondu à une température supérieure à 223°C pour lui donner la forme voulue. Le temps de refroidissement du polymère est ensuite relativement long. En outre, cette fusion entraîne les défauts identifiés ci-dessus qui nuisent aux performances finales du réservoir. Le développement de thermoplastiques, par exemple de PA6, de grades plus adaptés au rotomoulage, c'est-à-dire ayant une faible teneur en eau des poudres, une viscosité plus faible, une masse moléculaire adaptée, des anti-oxydants appropriés, etc. ne permet pas de résoudre tous ces défauts. Par ailleurs, l'évolution de la technologie des rotomouleuses, par exemple rotomoulage sous azote, refroidissement contrôlé, diminution du temps de cycle, ne permet pas non plus de résoudre tous ces défauts. En effet, par exemple, la fusion du PA6 commençant à partir de 220°C environ, cette étape de fusion est dégradante chimiquement car le PA6 en fusion doit rester de 5 à 15 minutes au-dessus de sa température de fusion avec des températures de procédé dépassant parfois de 40°C la température de fusion.

Les documents [10] à [15] montrent l'état de l'art actuel, les développements en cours, et surtout quels sont les thermoplastiques et leur mode de mise en oeuvre pour le développement des réservoirs de type IV, pour application pile à combustible.

Mais aucun de ces documents ne mentionne d'élément d'étanchéité ou d'enveloppe d'étanchéité aux fluides sous pression, par exemple de 10⁷ à 10⁸ Pa, ni leur fabrication. En outre, les compositions décrites dans ces documents ne permettent pas d'obtenir des éléments d'étanchéité ou d'enveloppe d'étanchéité ayant des propriétés barrières aux gaz sous pression et des propriétés mécaniques suffisantes, par exemple pur la fabrication de réservoir de type IV.

Il existe fondamentalement deux types de polymérisation pour obtenir du polyamide 6 : la polymérisation hydrolytique et la polymérisation anionique. La polymérisation hydrolytique n'est pas utilisable en rotomoulage réactif.

Les documents [16], [17] et [28] à [32] décrivent des compositions, de caprolactame permettant de fabriquer des d'objets moulés de polyamides ou copolyamides par polymérisation anionique dans un moule en rotation : le polymère est formé par polymérisation in situ, dans le moule en rotation. On parle donc ici de rotomoulage réactif.

Cependant les compositions de caprolactame décrites dans ces documents n'apportent pas de solution vraiment satisfaisante aux nombreux problèmes précités. En outre, il est nécessaire d'ajouter des agents de nucléation (charges de type silice, par exemple du microtalc), des plastifiants (par exemple phtalates) ou des modules élastomères (obtention d'alliages), pour améliorer les propriétés mécaniques et/ou barrières aux gaz. Ces ajouts augmentent le temps et le coût de fabrication de l'enveloppe. De plus, les mélanges sont complexes à réaliser et de leur homogénéité difficile à obtenir.

Il existe donc un réel besoin d'une composition palliant ces défauts, inconvénients et obstacles de l'art antérieur, en particulier d'une composition permettant de maîtriser le temps de fabrication, réduire les coûts et d'améliorer les propriétés barrières au gaz, notamment à l'hydrogène, et les propriété mécaniques, notamment de déformation élastique à basse température, des enveloppes fabriquées, et permettant d'obtenir des enveloppes compatibles pour une utilisation en tant que vessie d'étanchéité d'un réservoir de type IV. .

Cette composition doit permettre par exemple la fabrication d'une enveloppe ou vessie de réservoir pour pile à combustible basse température (PEMFC) pour laquelle le stockage de l'hydrogène effectué sous des pressions allant de 3,5x10⁷Pa à 7x10⁷Pa, voire 10⁸ Pa, nécessite des réservoirs légers, sûrs et peu coûteux, notamment pour le stockage embarqué (transports).

### Description de l'invention

La présente invention fournit précisément une composition palliant les défauts, inconvénients et obstacles de l'art antérieur.

La composition de la présente invention comprend en % en poids par rapport au poids total de la composition :
- de 70 à 90% d'un monomère ε-caprolactame de formule (I) ;
- de 0,1 à 1% d'un activateur ε-caprolactame de formule (II), dans laquelle R est choisi dans le groupe comprenant CₙH₂ₙ₊₂, n étant un nombre entier choisi de 1 à 10, de préférence de 1 à 6 ; -OH ; -OCₙH₂ₙ₊₂, n étant un nombre entier choisi de 1 à 10, de préférence de 1 à 6 ; et -NHR', où R' est soit CₙH₂ₙ₊₂, n étant un nombre entier choisi de 1 à 10, de préférence de 1 à 6 , soit une fonction amine ;
- de 2 à 6% d'un catalyseur ε-caprolactame de formule (III), dans laquelle X est choisi dans le groupe comprenant MgBr, MgI, Li et Na ; et
- de 10 à 20% d'un additif ε-caprolactone de formule (IV) ;
   dans laquelle les formules (I), (II), (III) et (IV) sont les suivantes :

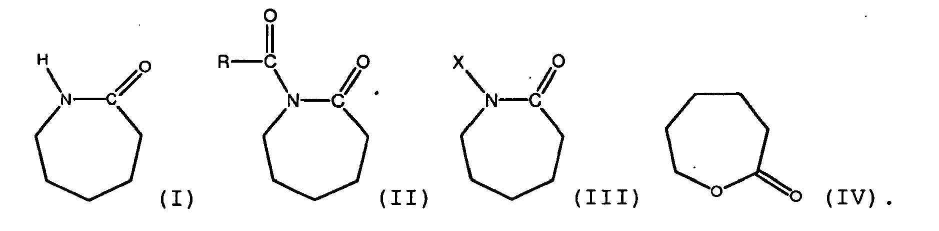

A titre d'exemple, une composition comprenant 80,6% dudit monomère ε-caprolactame, 0,4% dudit activateur ε-caprolactame, 4% dudit catalyseur ε-caprolactame, et 15% dudit additif ε-caprolactone a donné d'excellents résultats lors des nombreux essais expérimentaux réalisés par les inventeurs.

La composition de la présente invention permet d'obtenir des polyamides 6 par polymérisation anionique du monomère ε-caprolactame auquel sont ajoutés un catalyseur ε-caprolactame, par exemple de type bromomagnésium lactamate, un activateur ε-caprolactame, par exemple de type acylcaprolactame, et un additif ε-caprolactone, chacun étant utilisé dans une plage bien précise en terme de % en poids. Cette composition originale permet d'obtenir un polyamide 6 dont les propriétés barrières aux gaz, notamment à l'hydrogène, et les propriétés mécaniques, notamment de déformation élastique à basse température, sont améliorées par rapport aux compositions de l'art antérieur, et, a fortiori, compatibles avec une utilisation améliorée en tant que vessie d'étanchéité de réservoirs de type IV.

Ces propriétés mécaniques et/ou barrières au gaz sont améliorées sans ajouter d'agents de nucléation, de plastifiants ou de modules élastomères. Il en résulte un gain de temps et de coût non négligeables dans la fabrication d'éléments d'étanchéités tels que des enveloppes ou vessies d'étanchéité. En outre, compte tenu de la nature des composants de la composition de la présente invention, l'homogénéisation du mélange est facilitée.

Le monomère ε-caprolactame de la composition de l'invention est un caprolactame usuel appelé également 2-oxohexaméthylèneimine. On utilise de préférence un produit pur ou pratiquement pur. Il peut s'agir par exemple du AP CAPROLACTAME (marque de commerce) fabriqué par la société DSM Fibre Intermediate, qui est un produit pur à 99,9%.

Le catalyseur ε-caprolactame de la composition de l'invention est tel que défini ci-dessus, de préférence un lactamate de bromomagnésium. L'activateur est tel que défini ci-dessus, de préférence un acylcaprolactame. Ces composants ont été choisis par les inventeurs de la présente car ils permettent une réaction progressive et maîtrisée dans un temps court. En effet, la viscosité du mélange atteint son maximum (matériau solide) environ une à trois minutes (selon les dosages) après l'initiation de la réaction, ce qui laisse le temps à la matière de se répartir sur les parois du moule de rotomoulage. Pour information, l'activateur ε-caprolactame, par exemple tel que défini ci-dessus, peut être à l'état liquide à température ambiante, tandis que le monomère ε-caprolactame et le catalyseur ε-caprolactame (mélangés avec du caprolactame) peuvent être sous forme de paillettes qui fondent autour de 70°C.

Le catalyseur utilisé peut être par exemple un mélange de Bromine(hexahydro-2H-azepin-2-onato-N)magnésium (par exemple de 10 à 50% en poids) et de ε-caprolactame (par exemple 50 à 90% en poids), commercialisé par la société BRÜGGEMANN CHEMICAL sous le nom commercial NYRIM C1 CATALYST. L'activateur utilisé peut être par exemple le N-acétylhexanelactame, commercialisé par la société BRÜGGEMANN CHEMICAL sous le nom commercial AKTIVATOR 0. L'additif ε-caprolactone utilisé peut être par exemple le NYRIM ADDITIVE 6 (marque déposée) commercialisé par la société DSM RIM NYLON VOF.

En fait, c'est l'additif ε-caprolactone qui permet de remplacer l'adjonction d'agents de nucléation, de plastifiants ou de modules élastomères tout en conservant, voire améliorant, les propriétés mécaniques et/ou barrières au gaz du polymère obtenu. Cette molécule organique participe directement à la réaction de polymérisation et s'insère dans la chaîne macromoléculaire pour lui conférer une plus grande « souplesse ». La composition de la présente invention permet pratiquement de former un copolymère statistique. Cet additif permet astucieusement d'augmenter la ductilité du PA6 obtenu sans perturber sa mise en oeuvre et ses performances barrières.

La composition de la présente invention peut être utilisée dans la fabrication d'un élément d'étanchéité. L'élément d'étanchéité de la présente invention a la capacité de confiner un fluide, par exemple dans un appareil, dans une canalisation ou dans un réservoir, c'est-à-dire d'empêcher toute sortie du fluide, sous l'effet ou non d'une pression appliquée sur le fluide en contact avec l'élément d'étanchéité, pendant toute la durée de service de l'appareil, de la canalisation ou du réservoir.

Par « fluide », on entend dans la présente un liquide ou un gaz ou encore d'un mélange de gaz et de liquide. Dans chaque cas, il peut s'agir d'un liquide pur ou d'un gaz pur ou d'un mélange de plusieurs liquides ou de plusieurs gaz. Par exemple, dans le cas d'un accumulateur hydraulique ou hydropneumatique, deux fluides peuvent être confinés, par exemple un gaz inerte et un liquide, par exemple de l'azote et de l'huile minérale.

Par « élément », on entend dans la présente toute structure permettant d'assurer une étanchéité. Il peut s'agir par exemple d'un joint d'étanchéité ; d'une vessie d'étanchéité, autosupportée ou non ; d'un revêtement d'étanchéité ; d'une enveloppe d'étanchéité ; d'une enveloppe d'étanchéité interne ou externe d'un réservoir ; d'un flacon ou d'un bidon étanche ; etc.

La présente invention trouve une application avantageuse dans le confinement de fluides sous pression. Dans ce cas, l'élément d'étanchéité est une enveloppe d'étanchéité aux fluides sous pression.

L'utilisation de la composition de la présente invention n'est pas limitée à un procédé particulier permettant d'obtenir l'élément d'étanchéité. En effet, les propriétés améliorées du polymère obtenu grâce à la composition de la présente invention sont inhérentes à ladite composition. Toutefois, la composition de la présente invention, présente un avantage certain pour la réalisation d'une enveloppe d'étanchéité par rotomoulage. On peut utiliser par exemple la composition de la présente invention pour la fabrication par rotomoulage d'une enveloppe d'étanchéité aux gaz d'un réservoir composite de type IV. Un protocole permettant de réaliser un tel réservoir est exposé ci-dessous.

Ainsi, la présente invention fournit également un procédé de fabrication d'une enveloppe d'étanchéité, ledit procédé comprenant les étapes suivantes :
(a) préparation et introduction d'une composition selon l'invention dans un rotomoule ;
(b) mise en rotation du rotomoule et polymérisation du monomère ε-caprolactame de ladite composition en polycaprolactame, ladite composition étant chauffée à une température de polymérisation supérieure ou égale à la température de fusion de l'ε-caprolactame et inférieure à la température de fusion dudit polycaprolactame, de manière à former ladite enveloppe par rotomoulage couplé à une polymérisation sans fusion du polycaprolactame obtenu ;
(c) cristallisation du polycaprolactame obtenu ; et
(d) démoulage de l'enveloppe de polycaprolactame obtenue.

Le polymère se forme en même temps qu'il épouse la forme du rotomoule. On parle donc de rotomoulage réactif puisque le rotomoule sert à la fois de réacteur chimique et de moule donnant la forme de la vessie à proprement parler. Ce rotomoulage réactif est particulièrement économique, rapide et versatile. Il conduit à l'obtention de matériaux plus souples que ceux de l'art antérieur (rotomoulage par fusion) et ayant des propriétés de barrière améliorées, notamment aux gaz.

La réaction de polymérisation anionique du monomère caprolactame est une réaction chimique tout à fait classique, qui permet de polymériser un monomère précurseur d'un polymère thermoplastique en ledit polymère thermoplastique. Cependant, le développement, de la « voie réactive » de la présente invention a nécessité de nombreux travaux de recherche relativement à la formulation de la composition de la présente invention, afin de choisir les activateurs, catalyseurs et additifs les plus appropriés en terme de procédé (compétition polymérisation / moulage) et de propriétés finales recherchées. De nombreux travaux de recherche ont également été nécessaires concernant l'optimisation des protocoles de rotomoulage pour introduire les composants liquides ou leur mélange et maîtriser la polymérisation anionique dans le moule en rotation.

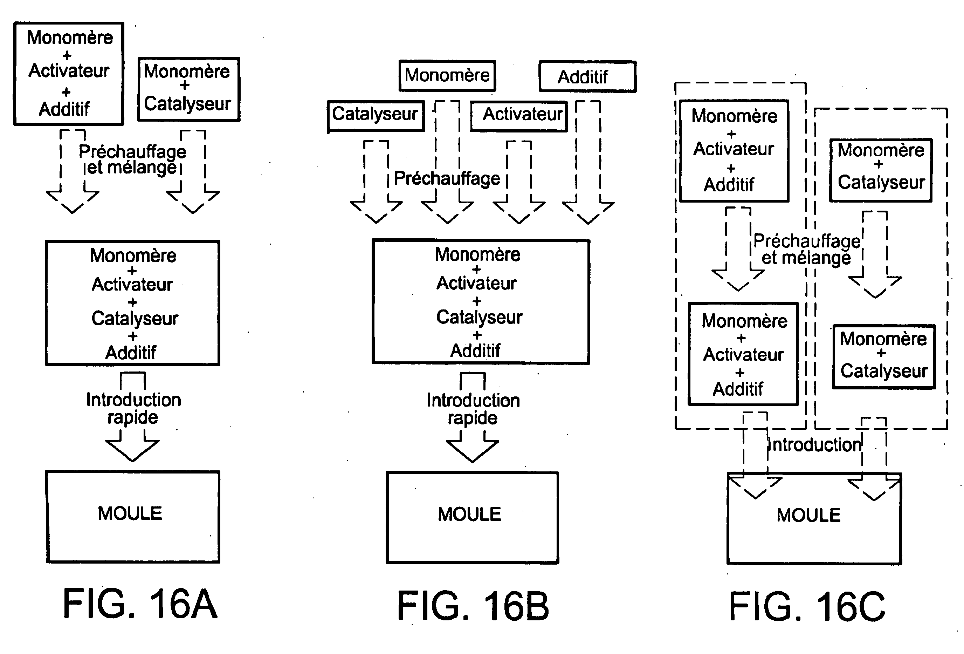

Tout mode de préparation de la composition de la présente invention à partir de chacun de ses composants convient, pourvu que la concentration de chacun des composants soit telle que définie dans la présente invention. De préférence, on choisira bien entendu un mode de préparation évitant que la polymérisation soit déclenchée avant introduction du mélange dans le rotomoule. Les figures 16A, 16B et 16C annexées présentent des exemples de préparation de la composition de la présente invention. Ainsi, par exemple, dans l'étape (a), on peut préparer deux pré-mélanges de ladite composition, l'un contenant le monomère, l'activateur et l'additif, l'autre le monomère et le catalyseur, ces deux pré-mélanges étant mélangés ensemble juste avant, lors de leur introduction ou dans le rotomoule pour former ladite composition. Les figures 16A et 16C annexées illustrent des exemples de préparations de pré-mélanges. Ainsi, les deux pré-mélanges peuvent être préparés et stockés (de préférence sous gaz neutre et sec) séparément plusieurs heures, voire plusieurs jours avant la fabrication de l'enveloppe et mélangés ensembles au moment de la mise en oeuvre de la présente invention. Par exemple également, on peut introduire simultanément les quatre composants de la composition de la présente invention dans le moule (figure 16B).

Avantageusement, selon l'invention, dans l'étape (a), la composition ou les pré-mélanges est/sont en outre préchauffée/préchauffés à une température de préchauffage supérieure ou égale à la température de fusion dudit monomère et inférieure à ladite température de polymérisation, avant ou après l'étape (b) d'introduction, de manière faire fondre la composition et l'homogénéiser. Le ε-caprolactame est liquide à partir de 70°C à pression atmosphérique. Les figures 16A à 16C présentent ce mode de réalisation dans différentes configurations de mélange et pré-mélanges. Si l'un des autres composants de la composition a une température de fusion supérieure à la température de fusion du monomère, on préchauffe de préférence le mélange ou les pré-mélanges au moins à ladite température de fusion.

Les pré-mélanges ou mélange peuvent être réalisés par exemple dans un mélangeur pour caprolactame. Dans le cas des pré-mélanges, ce mélangeur peut être constitué par exemple de deux cuves en acier inoxydable dans lesquelles sont introduits d'un côté, un mélange caprolactame + catalyseur et de l'autre côté, un mélange caprolactame + activateur + additif. Ces deux pré-mélanges peuvent alors être homogénéisés à la même température, typiquement de 100 à 150°C, par exemple de 110 à 135°C, et agités (de préférence sous gaz inerte et sec) par un système mécanique interne. Chaque cuve est avantageusement dotée d'un piston de dosage permettant d'injecter une quantité précise de chaque pré-mélange dans le rotomoule. Le contact entre les deux pré-mélanges peut se faire à l'extérieur du mélangeur, par exemple à l'aide d'une buse permettant alors d'injecter le mélange obtenu dans le rotomoule.

Selon l'invention, de préférence, à l'étape (a), on purge au moins le monomère ε-caprolactame et le catalyseur ε-caprolactame de ladite composition, juste après la pesée les sacs et pots de ces composants, au moyen d'un gaz inerte, de préférence sec, en raison de leur grande sensibilité à l'humidité. De préférence encore, on purge également les autres composants de la composition de la présente invention. De préférence, le rotomoule est également purgé au moyen d'un gaz inerte sec, lors de la mise en oeuvre de l'étape (c). Le gaz inerte peut être par exemple de l'azote sec. Le gaz inerte est de toute préférence sec, afin que la réaction de polymérisation se fasse en milieu anhydre, pour éviter l'oxydation et la reprise hydrique des composants ε-caprolactames avant la polymérisation. Dans ce cas, le mélangeur précité peut avantageusement être équipé d'un système de balayage, par exemple d'azote sec.

La polymérisation est initiée, à la température de polymérisation, dès que la composition est formée, c'est-à-dire dès que tous les composants de la composition de la présente invention sont mélangés ensemble. Il est donc important de ne pas perdre de temps, au risque de voir le mélange se polymériser avant son injection dans le moule. L'évent par lequel on injecte le mélange liquide ou les pré-mélanges dans le rotomoule peut être avantageusement modifié en forme d'entonnoir pour faciliter l'introduction du mélange ou des pré-mélanges. Avantageusement, l'injection des deux pré-mélanges peut être réalisée de manière automatique en utilisant un injecteur basse pression ou un injecteur haute pression, par exemple à piston racleur.

La quantité de composition selon l'invention introduite dans le rotomoule détermine, en fonction de la taille du moule, l'épaisseur de la paroi de l'enveloppe fabriquée selon le procédé de la présente invention. Le choix de cette épaisseur est fait principalement :
- en fonction des performances recherchées de barrière au gaz stocké, par exemple à l'hydrogène, du polycaprolactame (pour l'hydrogène, projets de normes ISO TC 197 et EIHP II qui autorisent une fuite de 1 cm³/litre de réservoir/heure),
- en fonction des performances mécaniques du thermoplastique, par exemple de résistance suffisante à la mise en place d'un renfort mécanique externe à l'enveloppe (vessie), par exemple par bobinage de fibres de carbone (l'enveloppe servant alors de mandrin), lors de la fabrication d'un réservoir, et
- en fonction des performances mécaniques du thermoplastique, par exemple une ductilité suffisante pour ne pas présenter de fatigue lors des nombreux remplissages du réservoir (supérieur ou égale à 1500 cycles entre -40 et +85°C.

Selon l'invention, l'enveloppe a généralement une paroi d'épaisseur définie de façon à pouvoir supporter la fuite du gaz à la pression à laquelle il doit être stocké, appelée pression de service, habituellement comprise entre 10⁷ et 10⁸ Pa (entre 100 et 100 bars). La présente invention s'applique bien entendu à d'autres pressions que celles-ci, généralement de 10⁵ à 10⁸ Pa, l'épaisseur de l'enveloppe étant choisie notamment en fonction de cette pression de service et de la nature du gaz. En général, l'épaisseur de l'enveloppe est comprise entre 1 mm et 60 mm, par exemple entre 1 mm et 20 mm, par exemple entre 2 et 10 mm.

Dans le procédé de l'invention, la polymérisation est effectuée dans un moule en rotation ou rotomoule. Pour cela, on peut utiliser une rotomouleuse classique, par exemple telle que celles décrites dans les documents précités relatifs au rotomoulage d'un matériau thermoplastique en fusion. De préférence le moule de la rotomouleuse est suffisamment étanche aux liquides, en particulier à la composition de l'invention dépourvue de son additif, car elle a alors une viscosité inférieure à celle de l'eau. Le rotomoule peut avantageusement être équipé d'un ou plusieurs évent(s) et d'une entrée d'un gaz neutre pour pouvoir être purgé au moyen d'un gaz inerte sec pour et/ou lors de la mise en oeuvre de l'étape (c) de polymérisation comme expliqué ci-dessus.

Selon l'invention, le rotomoule est de préférence mis en rotation suivant deux axes (rotation biaxiale), de manière à ce que la polymérisation se fasse sur toute la surface interne du moule prévue pour former l'enveloppe et conformément à celle-ci.

En rotomoulage de matériau en fusion selon l'art antérieur, les vitesses de rotation de l'axe primaire et de l'axe secondaire sont entre 1 et 20 tpm (« tpm » : tours par minute), le plus souvent entre 2 et 10 tpm. Dans le procédé de la présente invention, les vitesses de rotation (vitesse axe primaire, vitesse de rotation axe secondaire et rapport des vitesses) sont du même ordre de grandeur, bien que la fluidité du monomère soit supérieure à celle du matériau en fusion. Ainsi, selon l'invention, la vitesse de rotation du moule est de préférence de 1 à 30 tpm, de préférence encore de 2 à 25 tpm (tours par minute), suivant l'axe primaire et secondaire. Le rapport des vitesses (vitesse axe secondaire / vitesse axe primaire) est de préférence égal à 7,5. Ces vitesses de rotations préférées ont donné de très bons résultats avec la composition de la présente invention.

Selon une variante de la présente invention, le rotomoulage peut être effectué dans une machine de rotomoulage à balancement (« rock and roll »). Le rotomoule est dans ce cas animé d'un mouvement de rotation autour de l'axe longitudinal du moule, et d'un mouvement de balancement par lequel les deux extrémités du moule se trouvent alternativement en haut et en bas. Le document [36] décrit une telle machine utilisable pour mettre en oeuvre le procédé de l'invention, et son utilisation. Un tel rotomoulage peut être utile par exemple pour la fabrication de réservoir de grande taille et/ou allongés. Les compositions et températures utilisées sont celles de la présente invention.

Selon l'invention, la polymérisation est effectuée à une température telle que l'enveloppe se forme sans qu'il y ait fusion dudit polycaprolactame formé. En effet, si la température de fusion du polymère formé est atteinte ou dépassée lors de la polymérisation du monomère, cela conduit aux défauts précités des vessies de l'art antérieur obtenues par rotomoulage du matériau en fusion. Selon l'invention, l'étape consistant à polymériser le monomère ε-caprolactame en polycaprolactame ou polyamide 6 (PA6) dans le moule en rotation est donc réalisée de toute préférence à une température de polymérisation de 150 à 200°C, de préférence de 160 à 180°C.

Pour les mêmes raisons que celles exposées ci-dessus pour le chauffage des pré-mélanges et/ou de la composition avant introduction dans le moule de préférence, selon l'invention, le rotomoule peut être chauffé à la température de 100 à 200°C, de préférence de 130 à 185°C, avant introduction de la composition de l'invention. Le chauffage du moule peut être réalisé par exemple au moyen d'un four dans lequel le moule est introduit. Lorsque le moule a atteint la température de 100 à 200°C, de préférence de 130 à 185°C, le moule peut être sorti du four pour y introduire la composition de la présente invention. On peut éventuellement se passer de four en utilisant par exemple des lampes infrarouges (IR), ou un moule avec chauffage intégré, par exemple par des lampes infrarouges, des résistances électriques, ou un moule double paroi avec circulation d'un fluide caloporteur.

Dans un mode de réalisation avantageux, en particulier pour réaliser une enveloppe d'étanchéité épaisse selon l'invention, on peut répéter les étapes (a)+(b)+(c). Cela permet de former une enveloppe d'étanchéité à plusieurs couches de polycaprolactame(s) identiques ou différentes, en épaisseur et/ou en composition. Ainsi, on peut à partir de la même composition ou à partir de compositions différentes, réaliser plusieurs polymérisations successives et obtenir une enveloppe multicouche selon l'invention. Les compositions peuvent être différentes par la concentration de chacun des composants et/ou par la nature des composants de la composition, dans le cadre de la définition de la composition de la présente invention.

Par exemple, pour obtenir des épaisseurs de paroi d'enveloppe supérieures à 3-4 mm, avantageusement, plusieurs étapes de polymérisation successives peuvent être mises en oeuvre jusqu'à atteindre l'épaisseur souhaitée. Par exemple, il est aisé de faire une épaisseur de polycaprolactame de 6 mm en une seule couche grâce à la présente invention, mais pour obtenir une homogénéité certaine en épaisseur, une épaisseur de 2 à 3 mm est préférable. Ainsi pour une épaisseur de paroi d'enveloppe de 6 mm ou plus, il est préférable de faire par exemple plusieurs couches successives de 3 mm du polycaprolactame.

Avantageusement, la réaction de polymérisation étant exothermique, il n'est pas toujours nécessaire de remettre le rotomoule dans le four pour polymériser chaque couche une fois la polymérisation de la première couche lancée. En effet, la polymérisation d'une première couche peut suffire à maintenir une température suffisante pour la polymérisation anionique de la couche suivante.

Le temps de réaction de polymérisation dépend notamment de la nature de l'activateur et du catalyseur, de leurs proportions, de la température de mise en oeuvre, et de la taille de la pièce à fabriquer. Un des nombreux avantages liés à la composition de la présente invention est que la réaction de polymérisation est très rapide, en général de 2 à 10 minutes, souvent autour de 1 à 5 minutes. Les compositions préférées de la présente invention permettant d'obtenir, de l'étape d'injection à l'étape de cristallisation, le polymère final en 2 à 10 minutes environ, de préférence en 10 minutes environ. La réaction complète de polymérisation se déroule en fait en quatre phases :
- Mélange des réactifs : la viscosité est stable et faible, les composants du mélange n'ont pas encore réagi.
- Polymérisation : les monomères s'assemblent pour former les macromolécules de polyamide ce qui entraîne une augmentation de la viscosité. Les macromolécules (polymères) sont initiées à partir des centres actifs (activateurs) sur lesquels viennent se greffer les monomères de caprolactames. Ainsi, le poids moléculaire du polyamide-6 obtenu dépend directement du pourcentage d'activateur dans le mélange réactif. La vitesse de réaction est quant à elle fonction notamment de la proportion de catalyseur. C'est lors de cette phase que l'homogénéisation de la pièce est critique.
- Cristallisation : les macromolécules se regroupent pour former les structures semi-cristallines, c'est la germination suivie de la croissance des sphérolites. L'apparition de zones ordonnées dans le milieu visqueux rend celui-ci trouble (diffusion de la lumière).
- Retrait, identifié par un décollement entre le matériau et le moule. Le retrait marque la fin de la cristallisation.

L'équation chimique de la polymérisation est schématisée ci-dessous. Dans les formules de ce schéma, les liaisons entre les atomes C et N sont des liaisons covalentes. Elles sont représentées en pointillés pour indiquer qu'elles s'ouvrent préférentiellement lors de la polymérisation. « p » est le degré de polymérisation du polyamide 6. Ce degré de polymérisation peut être 1 ≤ p ≤ 100 000.

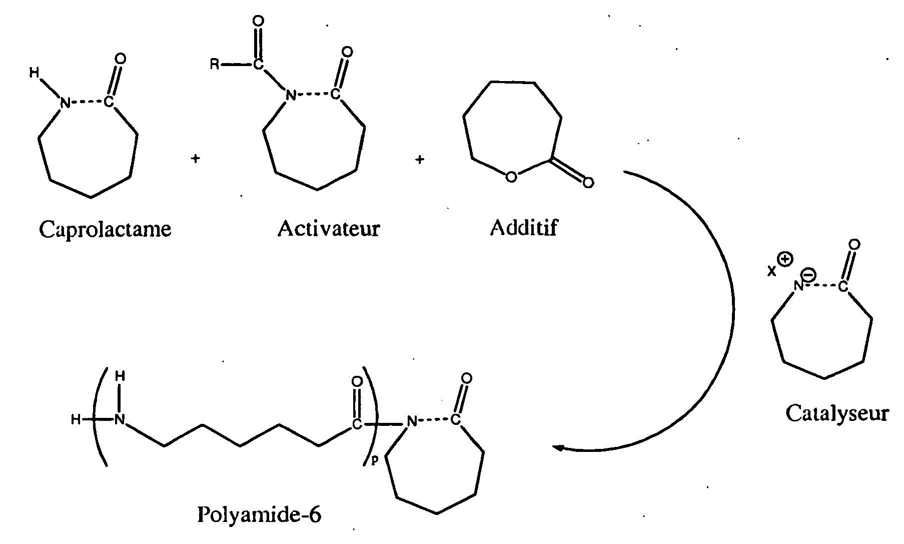

Lorsque la polymérisation est terminée, en particulier lorsque la longueur des chaînes est suffisante et la cristallisation accomplie (organisation des chaînes de polymère), on peut éventuellement refroidir le moule quelques minutes, notamment pour faciliter la manutention de l'enveloppe fabriquée, afin d'éviter tout risque de brûlures. L'enveloppe est alors démoulée. Il en résulte un gain de temps évident par rapport aux procédés de l'art antérieur, notamment compte tenu de l'inertie du moule, où la température de rotomoulage en fusion de l'art antérieur était bien supérieure à celle utilisée dans le procédé de la présente invention, et où il était nécessaire d'attendre que le matériau passe de l'état fondu à l'état solide.

Le procédé de l'invention permet la fabrication d'enveloppe d'étanchéité de polycaprolactame, susceptible d'entrer dans la fabrication de tout réservoir composite destiné au stockage de fluide (liquide ou gaz ou du mélange liquide + gaz), en particulier de gaz sous pression. Les enveloppes d'étanchéité fabriquées par le procédé de l'invention sont plus performantes en terme de propriétés mécaniques et barrières aux gaz que celles de l'art antérieur, notamment car il n'y a plus de risque de coupure de chaînes, d'oxydation, de réticulation, de polycondensation, de porosité finale, de contraintes résiduelles ou d'inhomogénéité, etc., inhérents aux phénomènes de fusion et de solidification des polymères thermoplastiques.

En outre, comme le montrent les résultats expérimentaux exposés dans les exemples ci-dessous, l'état de surface intérieur de ces enveloppes est bien meilleur que celui de vessies obtenues par un procédé de matériau en fusion de l'art antérieur ou avec les compositions de polymérisation de l'art antérieur. Ces propriétés améliorées se répercutent évidemment sur toutes les propriétés des réservoirs qui sont fabriqués à partir de ces enveloppes.

Selon l'invention, l'enveloppe obtenue peut en outre être soumise à un ou plusieurs post-traitement(s) destiné (s) à revêtir sa surface interne ou externe d'une ou de plusieurs couche (s) mince(s) afin d'améliorer encore les propriétés d'étanchéité de la vessie au gaz qui y sera stocké (propriétés barrières) et/ou de lui conférer des propriétés chimiques particulière, par exemple de résistance à des attaques chimique, une qualité de grade alimentaire ou une meilleure tenue aux vieillissements. Ce post-traitement peut consister en un traitement de dépôt de type SiOx, où 0 ≤ x ≤ 2, ou bien Si_{y}N_{z}Cₜ, où 1 ≤ y ≤ 3, 0,2 ≤ z ≤4 et 0 ≤ t ≤ 3, par dépôt en phase vapeur assisté par Plasma (PECVD), d'aluminium par dépôt physique en phase vapeur (PVD), dépôt de type époxy par réticulation chimique, ou fluoration avec du CF₄, par exemple. Les documents [21] et [22] décrivent ce type de post-traitement bien connu de l'homme du métier dans la fabrication des vessies de réservoir de type IV, et utilisable sur la vessie obtenue par le procédé de la présente invention.

Selon l'invention, on peut fixer au moins une embase de réservoir à l'intérieur du rotomoule avant de mettre en oeuvre l'étape (c) de manière à ce que l'embase de réservoir soit incorporée à l'enveloppe d'étanchéité lors de la polymérisation. Cela permet en particulier de fabriquer un réservoir avec ou à partir de ladite enveloppe (par exemple une vessie d'étanchéité). Lorsque l'enveloppe fabriquée est petite (par exemple pour un petit réservoir) une seule embase peut être suffisante. Pour une enveloppe de grande taille (par exemple pour un réservoir de grande taille), on préfère placer deux embases, notamment pour permettre un remplissage et une vidange rapide du réservoir. L'embase (ou les embases) peut (peuvent) être placée (placées) à une extrémité (aux deux extrémités) de l'enveloppe, en particulier lorsqu'elle a une forme allongée, mais également sur la longueur de l'enveloppe, quelque part entre les extrémités.

Selon l'invention, ladite, au moins une, embase métallique assure la connexion intérieur/extérieur du réservoir pour son remplissage et pour l'utilisation du gaz stocké. L'embase peut être une embase classiquement utilisée pour ce type de réservoir, par exemple une embase en aluminium ou en acier. Une ou plusieurs embase(s) peuvent être disposée(s) dans le moule pour obtenir une ou plusieurs embases sur l'enveloppe fabriquée. La ou les embase(s) peut (peuvent) être soumise à un traitement destiné à améliorer encore l'étanchéité de la jonction embase/enveloppe. Il peut s'agir par exemple d'un traitement chimique consistant à déposer sur l'embase une résiné époxyde spécifique ou des silanes afin d'améliorer l'accroche chimique du PA6 obtenu par la polymérisation dans le procédé de l'invention. Ce traitement peut être par exemple un traitement tel que celui décrit dans le document [4]. Selon l'invention, préalablement à ce dépôt de résine, l'embase peut être sablée ou subir un traitement acide afin d'améliorer encore l'adhésion de la résine et donc de l'enveloppe sur l'embase.

L'inclusion d'une ou plusieurs embase(s) sur l'enveloppe peut être réalisée suivant les procédés classiques connus de l'homme du métier, par exemple suivant les procédés décrits dans les documents [4] et [23], ou dans un des documents précités où au moins une embase est prévue. Toutefois, dans la présente invention, le polymère thermoplastique n'est pas fondu pour être joint à l'embase, il est formé par polymérisation du monomère à la fois dans le moule et sur la ou les embases positionnée dans le moule avant le rotomoulage suivant le procédé de la présente invention. La ou les embase(s) peut (peuvent) être positionnée(s) par exemple de la manière décrite dans le document [23].

L'enveloppe obtenue suivant le procédé de l'invention, munie de la ou des embase(s), est ensuite démoulée. Grâce au procédé de la présente invention, le risque de fuite au niveau des embases est forcement diminué, car lors du rotomoulage, la viscosité du monomère en début de polymérisation est très faible et 11. diffuse très facilement dans les interstices et/ou les points d'accroche de l'embase.

La présente invention se rapporte également à un réservoir composite de stockage d'un fluide, ledit réservoir comprenant une enveloppe d'étanchéité susceptible d'être obtenue par mise en oeuvre du procédé de l'invention.

Le fluide peut être tel que défini ci-dessus, par exemple un gaz sous pression. La présente invention trouve une application pour le stockage de tout fluide sous pression ou non, par exemple d'hydrogène gazeux, d'hélium, de gaz naturel, d'air comprimé, d'azote, d'argon, d'hytane, etc.

Par exemple, ledit réservoir peut comprendre dans cet ordre, de l'intérieur du réservoir vers l'extérieur de celui-ci, au moins :
- ladite enveloppe (2) d'étanchéité,
- au moins une embase (4) métallique, et
- un renfort mécanique (6) externe de l'enveloppe.

L'enveloppe peut être telle que définie ci-dessus. Dans ce type de réservoir, elle est le plus souvent appelée « vessie ».

L'embase ou les embases peut/peuvent être telle (s) que définie(s) ci-dessus. S'il y a plusieurs embases, elles peuvent être identiques ou différentes.

Selon l'invention, le renfort mécanique externe de l'enveloppe assure la tenue mécanique du réservoir. Il peut s'agir de l'un quelconque des renforts connus de l'homme du métier disposés, habituellement autour des enveloppes de réservoirs, par exemple de type III ou IV. Il peut s'agir par exemple d'un enroulement filamentaire. Cet enroulement filamentaire peut être constitué par exemple de fibres de carbone et de résine thermodurcissable. Par exemple, la fibre de carbone préalablement imprégnée de résine époxy non réticulée peut être enroulée autour de la enveloppe maintenue par la ou les embases, par exemple suivant l'un des procédés décrits dans les documents [4], [5], [24] ou [25]. L'enveloppe, qui dans l'exemple particulier d'un réservoir de type IV, est une structure autosupportée, sert en fait de mandrin à cet enroulement filamentaire. Un réservoir de type IV peut ainsi être obtenu.

L'enveloppe fabriquée selon l'invention permet donc d'obtenir un réservoir composite de type IV dont les performances mécaniques et barrières sont bien supérieures à celles d'un même réservoir dont la vessie (constituée du même matériau thermoplastique) est fabriquée par extrusion soufflage, thermoformage, injection ou rotomoulage du matériau thermoplastique en fusion ou d'une composition de polymérisation de l'art antérieur.

La présente invention est particulièrement adaptée pour la fabrication de réservoir alimentant des piles à combustible, en particulier à basse température, pour lesquelles les exigences mécaniques sont très strictes et à hautes températures, pour lesquelles les exigences d'étanchéité sont très strictes également. Le fait d'utiliser des réservoirs de H₂ comprimé pour les PEMFC, notamment pour les applications transport (par exemple voiture, bus, etc.) nécessite d'avoir des autonomies suffisantes, c'est-à-dire d'embarquer le plus de H₂ possible, ce qui se fait en augmentant la pression de service du réservoir jusqu'à 7x10⁷ Pa (700 bars) et même d'avantage. De plus, pour les applications transport, les réservoirs doivent de préférence être légers, ce qui implique l'utilisation de réservoirs composites de type III ou IV.

Grâce à la composition de la présente invention et au procédé de la présente invention, l'enveloppe peut avoir une épaisseur telle qu'elle supporte une pression de service du réservoir comprise entre 10⁷ et 10⁸ Pa (entre 100 et 1000 bars). La composition de la présente invention peut donc être avantageusement utilisée pour la fabrication d'un réservoir de type III ou IV, par exemple tels que ceux précités.

La composition de la présente invention et le procédé de fabrication de l'enveloppe permettent également de fabriquer une enveloppe d'étanchéité utilisable pour la fabrication d'accumulateurs hydrauliques ou hydropneumatiques. Une telle enveloppe résiste en effet avantageusement à des pressions variables pouvant aller de la pression atmosphérique (10⁵ Pa) à 10⁸ Pa.

Des accumulateurs hydrauliques ou hydropneumatiques et leurs utilisations sont connus de l'homme du métier. Une des fonctions principales de ces accumulateurs est d'emmagasiner de l'énergie transmise par un liquide sous forme de volume et de pression et de la restituer automatiquement ou à la demande. Leur fonction peut être l'une ou plusieurs des fonctions suivantes : accumuler de l'énergie et distribuer cette énergie à une puissance souhaitée, de manière à permettre de réduire une puissance installée ; absorber des pulsations de pression produites par une pompe ; compenser des fuites par constitution d'une réserve de pression ; absorber des variations de volume d'un liquide, notamment provoquées par des différences de température dans un circuit de liquide et maintenir constamment le circuit sous pression ; transmettre intégralement des pressions d'un fluide à un autre sans risque de mélange.

Une description de tels accumulateurs et de leurs utilisations est présentée par exemple dans les Techniques de l'Ingénieur, A767, « Appareillage de contrôle des fluides dans les tuyauteries », de Jean Sutter, ou encore sur les sites Internet référencés [34] et [35] dans la liste des références annexée. Ils comprennent généralement un corps extérieur assurant la tenue mécanique et l'étanchéité de l'accumulateur, une poche interne souple pouvant contenir de manière étanche un gaz, généralement neutre (par exemple de l'azote). La poche n'est pas collée audit corps et forme un espace permettant à un fluide d'être introduit autour de celle-ci. L'accumulateur comprend également une première connectique permettant de remplir ou de vider ladite poche interne avec ledit gaz, et d'une deuxième connectique mettant d'introduire un fluide entre ladite poche et le corps de l'accumulateur lors de son utilisation. Le stockage de l'énergie enmaganisée dans l'accumulateur s'opère en comprimant le gaz contenu dans la poche interne souple par introduction du fluide par la deuxième connectique. La poche permet d'isoler le gaz qu'elle contient du fluide qui l'entoure, afin d'éviter toute dissolution ou entraînement du gaz dans le fluide, c'est-à-dire une diminution de la quantité de gaz présente dans la poche interne de l'accumulateur, une chute de pression de gonflage, et une augmentation de la compressibilité du fluide, entraînant une perturbation dans le fonctionnement de l'accumulateur et du dispositif qui utilise cet accumulateur.

Dans les accumulateurs de l'art antérieur, le corps est formé d'une coque métallique (acier au carbone ou acier inox) ou plastique (polychlorure de vinyle, polypropylène ou polyfluorure de vinyldiène) avec renfort métallique suivant l'utilisation (domaine, pression d'utilisation, etc.). La poche interne est faite en une seule pièce. Cette poche est généralement constituée de caoutchouc nitrile (NBR), elle peut également être constituée d'un matériau choisi parmi l'isobutène-isoprène (IIR), l'épichlorhydrine, l'éthylène propylène, le caoutchouc naturel, l'élastomère à usage alimentaire, le nitrile pour hydrocarbure, etc. Le fluide entourant l'enveloppe est généralement choisi parmi de l'eau, de l'huile minérale, ou du gaz (par exemple de l'azote ou un autre gaz neutre).

Les accumulateurs de la présente invention diffèrent de ceux de l'art antérieur, par exemple de ceux décrits dans le document et les sites Internets précités, en ce que, dans la présente invention, on remplace le corps de ces accumulateurs de l'art antérieur par l'enveloppe d'étanchéité de la présente invention, munie ou non d'un renfort mécanique externe tel que défini ci-dessus pour les réservoirs de type IV (par exemple d'un enroulement filamentaire). Le renfort mécanique sera utile par exemple lorsque les pressions d'utilisation de l'accumulateur le requièrent. En d'autres termes, l'accumulateur de la présente invention peut se présenter par exemple sous la forme d'un réservoir de type IV conforme à la présente invention, ce réservoir étant muni en outre d'une poche souple interne et de la connectique précitée. La connectique, la poche souple, le gaz dans la poche et lé fluide autour de la poche peuvent être choisis parmi ceux connus de l'homme du métier, par exemple parmi ceux cités dans le document et les sites Internet précités. Ces éléments peuvent être par exemple tels que ceux cités ci-dessus.

De manière plus générale, la composition de la présente invention et le procédé de mise en oeuvre par rotomoulage peuvent être utilisés pour différentes applications telles que :
- vessie d'étanchéité (« liner ») de réservoir de type IV ;
- revêtement interne (« coating ») de vessie insuffisamment étanche de réservoir de type IV (apport de la propriété barrière au gaz) ;
- revêtement interne de vessie métallique, par exemple en aluminium ou en acier, de réservoir de type III (apport de la propriété barrière au gaz pour limiter les effets de fragilisation ou à l'eau pour limiter les effets de corrosion) ;
- revêtement interne de réservoir de type I ou de type II ; etc.

Ainsi, les formulations spécifiques de la composition de la présente invention mises en oeuvre par moulage en rotation peuvent être utilisées chaque fois qu'une propriété barrière est recherchée (liquide ou gaz ou mélange liquide + gaz) avec éventuellement une bonne souplesse mécanique (déformation élastique nécessaire sans fatigue) et avec éventuellement une tenue thermomécanique sur une large plage de température, typiquement de - 60°C à + 110°C, sans altération des propriétés précédentes.

Le rotomoulage réactif utilisé dans la présente invention permet la réalisation d'un produit fini rapidement (quelques minutes) et en une seule étape, contre quatre étapes par la voie fondue de l'art antérieur. L'étape de rotomoulage en est facilitée grâce à des températures moins élevées (peu d'oxydation, de coupures de chaînes, de risque de polycondensation, etc.) et un environnement (de préférence atmosphère inerte et sèche) moins critique que dans les procédés de l'art antérieur. L'industrialisation est donc plus aisée. De plus, le PA6 final synthétisé in situ possède des propriétés améliorées comme on peut le voir à travers les exemples ci-dessous. Enfin, il est plus facile de modifier très facilement les propriétés finales du polymère par le choix et la quantité d'activateur, de catalyseur et d'additifs utilisés.

D'autres avantages pourront encore apparaître à l'homme du métier à la lecture des exemples ci-dessous, illustrés par les figures annexées, donnés à titre illustratif.

### Brève description des figures

- La figure 1 représente une courbe typique de température (T en °C) en fonction du temps (t en minutes) d'un rotomoulage réactif utilisant la composition de la présente invention (à partir de l'injection, le moule reste en dehors du four).
- La figure 2 représente une courbe de température (T en °C) en fonction du temps (t en minutes) d'un rotomoulage réactif à polymérisation rapide utilisant une composition selon la présente invention dans laquelle, par rapport à la composition utilisée pour obtenir la courbe de la figure 1, une quantité plus importante de catalyseur et d'activateur est ajoutée (à partir de l'injection, le moule reste en dehors du four).
- La figure 3 représente une courbe de température (T en °C) en fonction du temps (t en minutes) d'un rotomoulage réactif à cristallisation tardive (taux de catalyseur faible, présence d'additifs perturbant la cristallisation) (à partir de l'injection, le moule reste en dehors du four).
- La figure 4 représente une courbe de température (T en °C) en fonction du temps (t en minutes) d'un rotomoulage réactif tricouche obtenu en répétant plusieurs fois les étapes (a), (b) et (c) du procédé de l'invention (à partir de la première injection, le moule reste en dehors du four).
- La figure 5 représente une coupe d'un « liner » 3 litres : à gauche pièce hétérogène obtenue avec une composition de caprolactame et des paramètres de procédé de l'art antérieur ; à droite pièce homogène obtenue grâce à la composition de la présente invention.
- La figure 6 est une photographie d'une vue en coupe d'une enveloppe tricouche (couches 1, 2 et 3) obtenue à partir de la composition de la présente invention : côté moule à gauche, côté air interne à droite
- La figure 7 est une photographie des sphérolites des couches 1, 2 et 3 de l'enveloppe tricouche de la figure 6.
- La figure 8 est une photographie de l'interphase entre les couches 2 (à gauche - zone à gros sphérolites) et 3 (à droite) de l'enveloppe tricouche de la figure 6.
- La figure 9 représente un graphique (Energie W/g en fonction de la température T en °C) regroupant les résultats d'analyses de calorimétrie différentielle à balayage (DSC) sur PA6 rotomoulé par voie fondue suivant l'art antérieur (trait discontinu) ; sur PA6 rotomoulé obtenu par voie réactive avec une composition de l'art antérieur sans additif (trait fin), et sur PA6 rotomoulé obtenue par voie réactive avec une composition de la présente invention (avec additif) (trait gras).
- La figure 10 représente un graphique (Contrainte (σ) (« *sigma* »)) en MPa en fonction de la déformation (ε) en % - courbe de traction uniaxiale à 20°C) montrant l'influence du taux d'activateur dans la composition de la présente invention sur l'allongement à rupture.
- La figure 11 représente un graphique (Contrainte (σ) en MPa en fonction de la déformation (ε) en %) (courbe de traction uniaxiale à 20°C) montrant l'influence de la concentration d'additif dans la composition de la présente invention (tests à 0 (trait pointillé), 10 (trait gras) et 15% (trait fin) en poids de la composition) sur les caractéristiques mécaniques d'une enveloppe rotomoulée (contrainte (σ) en MPa, en fonction de la déformation (ε) en %). Pour comparaison, est également représentée une courbe résultant de tests équivalents réalisés sur une enveloppe de polyéthylène.
   La figure 12 est un graphique montrant l'évolution du coefficient de perméation (Pe) mesuré pour différents échantillons de PA6 fabriqués par rotomoulage réactif à partir de la composition de la présente invention (coefficient de perméation à l'hydrogène à 27°C (Pe H₂ à 27°C) en mol/(m.Pa.s)).
- La figure 13 est une courbe Datapaq (marque déposée) du cycle de température (T en °C) en fonction du temps (t en minutes) d'un liner 22 L en PA6 obtenu par rotomoulage réactif (injection couche 1 (C1) à t=0) à partir d'une composition selon l'invention.
- La figure 14 représente schématiquement un exemple d'architecture d'un réservoir (1) de type IV fabriqué à partir d'une enveloppe (2) obtenue à partir d'une composition conforme à la présente invention. Cette figure représente les fonctionnalités des différents éléments qui composent ce réservoir.
- La Figure 15 présente 7 photographies prises au cours de la fabrication d'enveloppes d'étanchéité de 22 litres à partir de compositions et procédé selon l'invention.
- Les figures 16A, 16B, 16C présentent schématiquement différents modes de mélanges permettant d'obtenir la composition de la présente invention utilisables pour la mise en oeuvre du procédé de la présente invention.
- La figure 17 représente schématiquement un exemple d'architecture d'un accumulateur hydraulique (10) fabriqué à partir d'une enveloppe (2) obtenu à partir d'une composition conforme à la présente invention. Cette figure représente les fonctionnalités des différents éléments qui composent cet accumulateur.

### EXEMPLES

### Exemple 1 : Exemple de composants pour préparer une composition selon la présente invention

Les composants utilisés dans les exemples ci-dessous pour préparer des compositions conformes à la présente invention sont les suivants :
- Monomère ε-caprolactame (I) : AP CAPROLACTAME (marque de commerce), fournisseur : DSM Fibre Intermediate B.V., température de fusion : 69°C ;
- Activateur ε-caprolactame (II) : AKTIVATOR 0 (marque de commerce), fournisseur : Brüggemann Chemical, forme : liquide, température de fusion : -13°C ;
- Catalyseur ε-caprolactame (III) : NYRIM 1 CATALYST (marque de commerce) comme catalyseur (III) (Bromine(hexahydro-2H-azepin-2-onato-N)magnésium), fournisseur : Brüggemann Chemical, forme : paillettes à température ambiante, température de fusion à 70°C ; et
- Additif ε-caprolactone : NYRIM ADDITIVE 6 (marque déposée) comme additif (IV) commercialisé par la société DSM RIM NYLON VOF, forme : liquide à température ambiante, température d'ébullition autour de 260°C à 760 mm de Hg, température de fusion inférieure à 0°C.

Les formules chimiques de ces composants (I), (II), (III) et (IV) sont les suivantes :

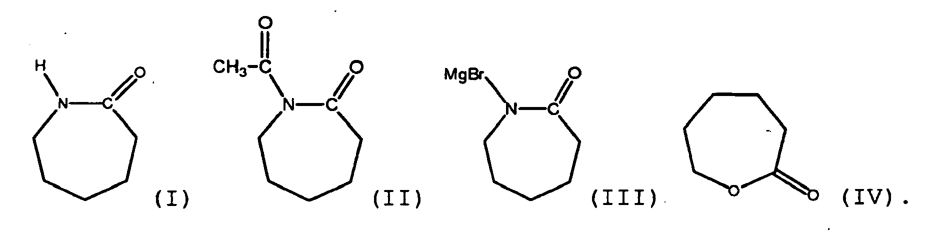

Dans les exemples ci-dessous, on les appelle respectivement « monomère », « activateur », « catalyseur » et « additif ».

Les figures 16a à 16c annexées montrent trois exemples de préparation et préchauffage de pré-mélanges à partir de ces composant, avant introduction dans le rotomoule pour effectuer la polymérisation.

### Exemple 2 : Exemple de dispositifs pour mettre en oeuvre le procédé de l'invention

Pour réaliser des pré-mélanges comme indiqué sur la figure 16a ou 16c annexée, on utilise un mélangeur BRONK (marque de commerce), modèle NCU 75/6. Ce mélangeur est constitué de deux cuves (compartiments) en acier inoxydable dans lesquelles seront introduits d'un côté, un mélange caprolactame + catalyseur et de l'autre côté, un mélange caprolactame + activateur + additif. Un système mécanique interne pour chaque cuve permet de mélanger ses deux pré-mélanges et de les préchauffer.

Chaque cuve du mélangeur est dotée d'un système permettant d'injecter de l'azote sec à l'intérieur des cuves afin de dégazer les composants utilisés et de les maintenir sous atmosphère sèche et inerte.

Chaque cuve du mélangeur est également dotée d'un piston de dosage permettant d'injecter une quantité définie de chaque pré-mélange dans le rotomoule.

Le mélange ou contact entre les deux pré-mélanges se fait à l'extérieur du mélangeur à l'aide d'une buse à double canal permettant d'injecter le mélange obtenu dans le rotomoule.

Le rotomoule utilisé dans ces exemples est du type Shuttle, de marque STP Equipment, et de référence LAB40. Pour le chauffage du rotomoule, on utilise un four électrique. Des évents sont prévus pour un balayage à l'azote sec lors de la mise en oeuvre des procédés de rotomoulage.

Avant injection des composants, pré-mélanges ou du mélange dans le rotomoule, une embase d'aluminium est fixée dans le moule, de la manière décrite dans le document [23], après avoir été soumise éventuellement à un traitement, par exemple comme celui décrit dans le document [4] .

L'embase est munie d'un entonnoir facilitant l'introduction des composants ou des pré-mélanges dans le rotomoule.

### Exemple 3 : Réalisation d'une enveloppe et tests sur la composition de l'invention

La composition utilisée dans cet exemple est la suivante en % en poids : 80,6% de monomère ε-caprolactame, 0,4% d'activateur, 4% de catalyseur et 15% d'additif. Dans cet exemple, la quantité totale de composition utilisée pour former l'enveloppe est de 397 g. Le volume de l'enveloppe formée est de 3 L.

On purge le monomère ε-caprolactame et le catalyseur ε-caprolactame juste après la pesée de ces composants, au moyen d'azote sec.

Les composants sont préchauffés, mélangés ensemble, puis introduits rapidement dans le rotomoule en rotation comme représenté sur la figure 16b. Le rotomoule a été chauffé dans un four jusqu'à une température de 160 à 190°C.

Le moule est en rotation à une vitesse d'axe primaire de rotation de 9 tr/min et d'axe secondaire de 6 tr/min. Le rapport des vitesses de rotation (rapport primaire / secondaire) est égal à 1,5.

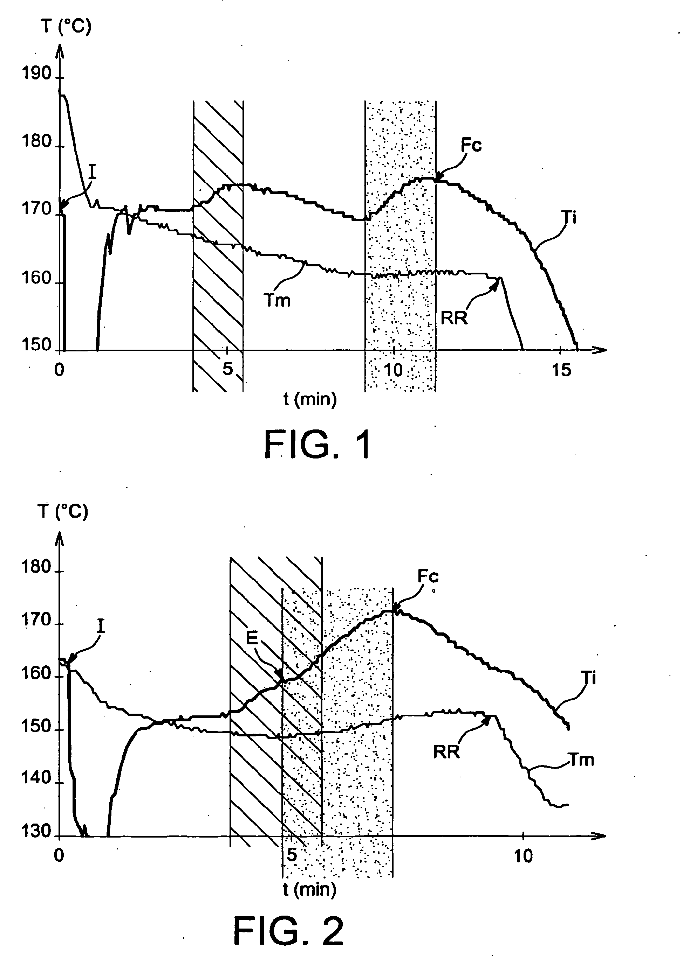

Les figures 1 à 3 annexées regroupent différentes mesures de températures effectuées dans cet exemple. Sur ces figures, l'évolution de la température du moule (Tm) et l'évolution de la température de l'air interne du moule (Ti). Les zones hachurées indiquent la période au cours de laquelle il y a polymérisation, et les zones pointillées indiquent la période au cours de laquelle il y a cristallisation. Le moment de l'injection de la composition dans le rotomoule est montré par la référence « I », et « RR » montre le début de la chute de température subséquente au refroidissement du moule (refroidissement rapide). « Fc » indique la fin de la cristallisation. Pour les trois figures, partir de l'injection, le moule reste en rotation en dehors du four.

Sur la figure 1 sont représentées des courbes typiques de température de rotomoulage réactif à partir de la composition précitée. A partir de l'injection, le moule reste en dehors du four. Les exothermes représentés sur cette figure (augmentation de la température) sont donc des marqueurs des étapes de polymérisation et de cristallisation.

Sur la figure 2 sont représentées des courbes de température d'un rotomoulage utilisant la composition précitée dans laquelle, par rapport à la composition utilisée pour obtenir la courbe de la figure 1, une quantité plus importante de catalyseur et d'activateur est ajoutée. Cette quantité plus importante correspond à 1,5 fois pour chacun de ces composants. Dans ce cas la réaction de polymérisation est plus rapide, les deux pics exothermiques peuvent se superposer. Néanmoins, la polymérisation est distincte de la cristallisation sous forme d'un épaulement (E) au pic de cristallisation.

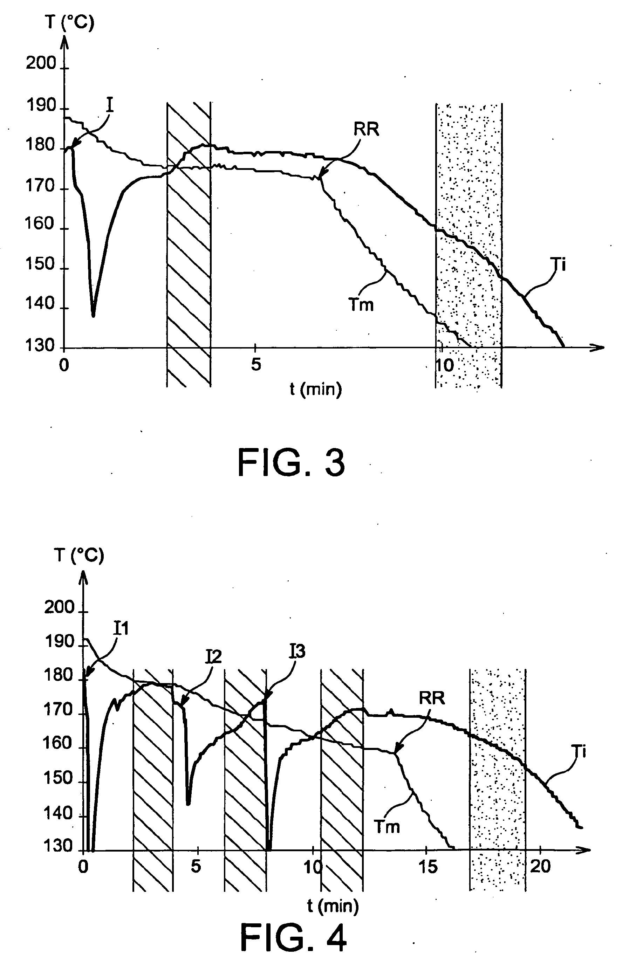

Sur la figure 3 sont représentés des courbes de température d'un rotomoulage réactif à cristallisation tardive : taux de catalyseur faible, présence d'additifs perturbant la cristallisation. Ces additifs sont 10% en poids d'additif de type silice. On remarque qu'ici, la cristallisation se déclenche dans la phase de refroidissement seulement (après « RR »).

Les courbes de température (courbes obtenues à l'aide d'un système DATAPAQ (marque déposée)) d'un cycle de rotomoulage réactif sont donc totalement différentes de celles d'un cycle classique de rotomoulage (fusion du polymère thermoplastique).

Ces courbes permettent un suivi précis de la polymérisation anionique in situ et sont un outil précieux pour la mise en oeuvre de la présente invention. A partir de ces courbes, le procédé utilisé dans cet exemple peut être décrit de la manière suivante :
1- Chauffage du moule à vide sous atmosphère neutre et sèche: la température de l'air interne suit d'une quinzaine de degrés inférieure l'évolution de la température du moule. Le chauffage est plus rapide que pour la voie fondue car le moule est vide.
2- Sortie du moule du four et arrêt de la rotation.
3- Injection du mélange dans le moule : la température de l'air interne chute en raison de la température inférieure du mélange.
4- Mise en rotation du moule : la température de l'air interne remonte jusqu'à se stabiliser 15°C environ en dessous de la température du moule au moment de l'injection. La durée de la stabilisation correspond au temps d'activation de la polymérisation.
5- Polymérisation caractérisée par une augmentation de la température de l'air interne (réaction exothermique) plus ou moins rapide selon le taux de catalyseur.
6- Cristallisation caractérisée par un deuxième pic exothermique.
7- Refroidissement rapide, optionnel selon la température de démoulage, de 80 à 40°C classiquement.
8- Arrêt de la rotation, ouverture du moule et démoulage de l'enveloppe formée.

L'enveloppe ainsi formée n'est ni oxydée, ni réticulée ; le polymère n'a pas subi de coupures de chaînes et ne présente ni infondus ni porosités résiduelles. Des tests montrant les propriétés physiques de ces pièces sont exposés ci-après.

### Exemple 4 : Réalisation d'une enveloppe multicouche selon l'invention

Les inventeurs réalisent dans cet exemple des pièces « épaisses » par superposition de plusieurs couches de polymère à partir de la composition et du procédé de la présente invention. Ceci ne pouvait pas être réalisé avec les compositions de l'art antérieur.

Dans cet exemple, une vessie d'étanchéité de 6 mm d'épaisseur (3 couches successives de 2 mm), de 22 litres de volume interne (équivalent eau) et équipée de deux embases métalliques est réalisée.

Deux pré-mélanges sont réalisés comme représenté sur la figure 16c à l'aide du mélangeur précité préalablement mis sous azote sec et à 135°C. Dans l'un des deux compartiments sont introduits : 1491,5 g de monomère et 143,1 g de catalyseur. Dans l'autre compartiment sont introduits : 1441,5 g de monomère, 536,6 g d'additif et 14,31 g d'activateur.

Après homogénéisation et préchauffage de chacun des deux pré-mélanges, l'injection de 1192,3 g du mélange (proportion de chacun des pré-mélanges : 1/3 de chaque compartiment) dans le moule, préalablement chauffé à 165°C, se fait par l'évent du rotomoule, à l'aide de l'entonnoir, pour former la première des trois couches.

Le moule est mis en rotation avec une vitesse de l'axe primaire de rotation de 6,2 tours/min et de l'axe secondaire de 23,3 tours/min. Le rapport des vitesses de rotation (rapport primaire / secondaire) est égal à 0,27.

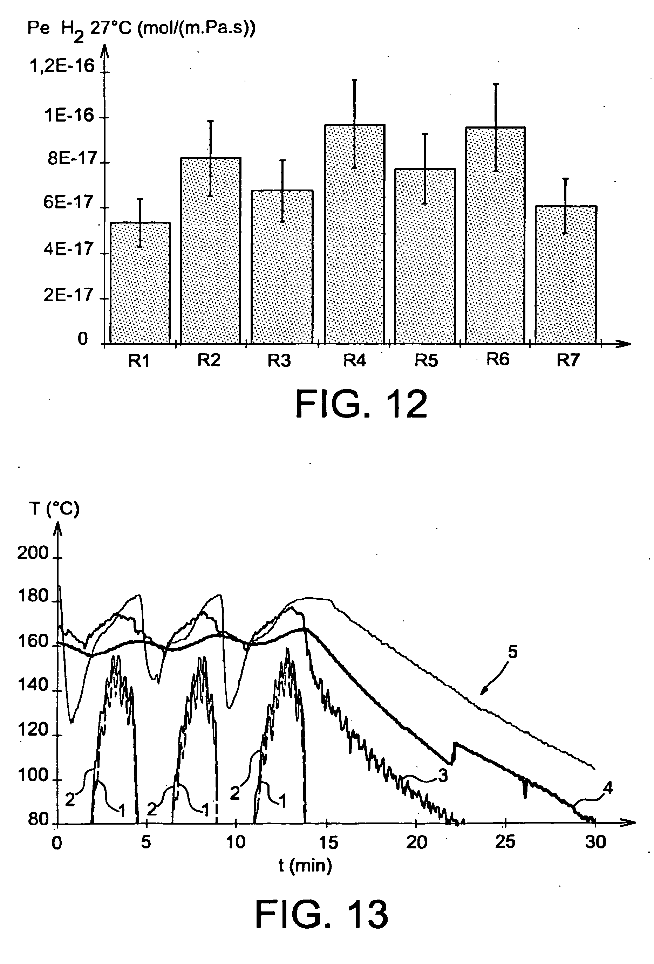

Le moule est maintenu en température dans le four pour les trois couches afin d'obtenir une très bonne répétition du cycle de température de chaque couche, comme on peut le voir sur le graphique de la figure 13 annexée montrant l'évolution de la température (moule, embase et air interne) en fonction du temps (« t » en minutes). Cette figure montre une courbe Datapaq (marque déposée) du cycle de température lors de la fabrication de ce « liner » de 22 L en PA6 obtenu par rotomoulage réactif (injection couche 1 (C1) à t=0) suivant cet exemple. Les pics de température allant de 80 à 156°C correspondent aux mesures de température de l'air externe du rotomoule lors du rotomoulage au moyen de deux capteurs de températures (courbes 1 et 2). Les autres courbes montrent l'évolution de la température du moule (courbe 3), de l'embase (courbe 4) et de l'air interne (courbe 5).

Ainsi, à partir d'une composition selon l'invention, et d'un procédé tel que décrit dans l'exemple 2, on met en oeuvre trois fois de suite les étapes de préparation de la composition, et de polymérisation et de cristallisation dans le rotomoule.

Chaque couche est injectée dans le moule dès que la couche précédente possède une viscosité suffisante pour ne pas s'écouler lors de l'arrêt de la rotation du moule et avant sa polymérisation complète afin d'assurer une adhésion optimale avec la couche suivante. Cette étape intervient donc quand la polymérisation est suffisamment avancée, c'est à dire entre 2 et 5 minutes après l'injection de la couche précédente dans le rotomoule. En raison du caractère exothermique de la polymérisation et de la cristallisation, et donc d'un refroidissement global très lent, il est donc possible de réaliser de nombreuses couches. Ainsi, il n'y a quasiment pas de limitation en épaisseur finale.

Dans cet exemple, la quantité totale de composition utilisée est de 3577 g.

Après refroidissement, on extrait du moule l'enveloppe formée.

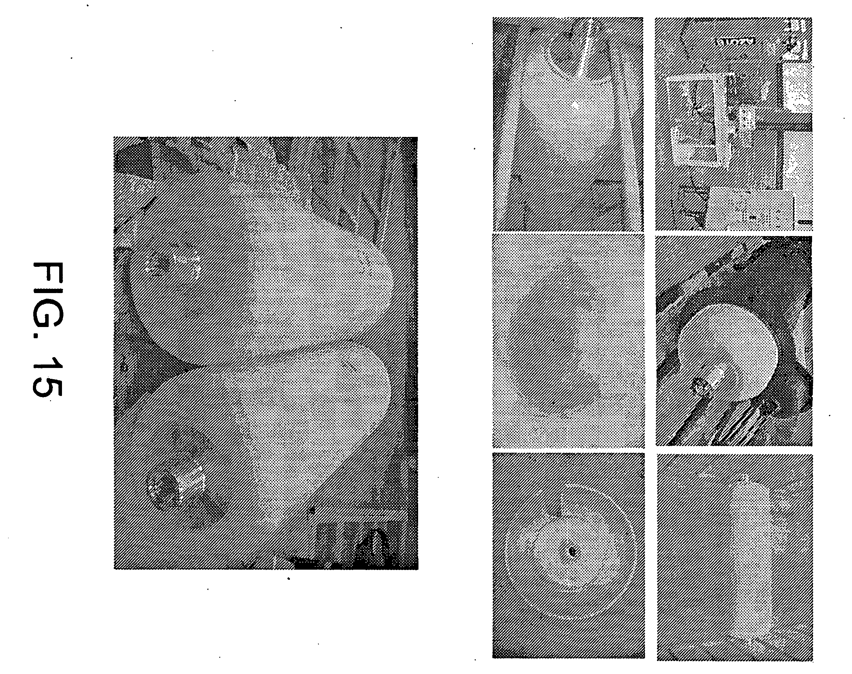

Les pièces obtenues sont montrées en photographies la figure 15. En haut à gauche : système d'injection BRONK (marque de commerce) et gaz neutre (azote) ; en haut au milieu : enveloppe obtenue avec embase lors de l'extraction du rotomoule ; en haut à droite et milieu à gauche : enveloppe lors du refroidissement complet. Photo centrale et photo milieu droite : intérieur de l'enveloppe côté embase et après découpe du dôme couvrant l'embase. En bas, deux enveloppes (« liner ») selon l'invention, de 22 L avec deux embases aluminium 2x10⁷ Pa (200 bars). Le lien embases-enveloppe est très intime, contrairement à celui d'une enveloppe obtenue avec un protocole de rotomoulage par fusion selon les techniques de l'art antérieur.

Le polymère thermoplastique qui a été obtenu est du polyamide 6 (ou polycaprolactame) présentant les propriétés indiquées dans la colonne la plus à droite dans le tableau comparatif suivant :

| type de rotomoulage | | voie fondue | | voie réactive | |
|---|---|---|---|---|---|
| *grade* | | *PA6 standard* | *PA6 modifié souple* | *PA6 standard* | *PA6 modifié souple* |
| polymérisation | | hydrolytique | | anionique | |
| masse molaire | *kg*/*mol* | 15-50 | | 50-300 | |
| densité | *g*/*cm³* | 1,13 | | 1,15 | 1,14 |
| tempéraure de fusion | *°C* | 227 | 227 | 225 | 200 |
| module d'élasticité | *MPa* | 1400 | 400 | 1900 | 700 |
| résistance à la traction | *MPa* | 65 | 40 | 75 | 45 |
| allongement à rupture | *%* | 30 | nd | 70 | > 300 |

Le PA6 voie fondue utilisé est le TECHNYL C217 (marque de commerce) de Rhodia Engineering Plastics (France). Le PA6 modifié souple est obtenu par ajout de modules élastomères. Le PA6 standard (voie réactive) correspond à une composition qui ne contient pas d'additif de type ε-caprolactone.

Le PA6 anionique standard est globalement plus performant que le PA6 hydrolytique standard de l'art antérieur par voie fondue (colonne « voie fondue ») (module d'élasticité, résistance à la traction et allongement à rupture meilleurs). De plus, les compositions de la présente invention (voie réactive - PA6 modifié souple) permettent d'obtenir des caractéristiques mécaniques plus proche du polyéthylène (PE) et donc davantage en adéquation avec les propriétés recherchées pour l'application vessie de réservoir de type IV (ductilité recherchée).

### Exemple 5 : Autres essais de multicouches selon l'invention

Avec une composition et un protocole comme dans l'exemple 4, on prépare un tricouche de 3 L. Il n'a pas été nécessaire de remettre le rotomoule dans le four pour chaque couche, la réaction de polymérisation étant exothermique, elle génère une température suffisante pour la polymérisation anionique de la couche suivante compte tenu de la faible quantité de matière à polymériser.

La figure 4 annexée représente une courbe de température (« T » exprimé en °C) du rotomoulage réactif tricouche en fonction du temps (« t » exprimé en minutes) obtenu dans cet exemple, en répétant plusieurs fois les étapes (a), (b) et (c) du procédé de l'invention (à partir de la première injection, le moule reste en dehors du four). La courbe en trait gras représente l'évolution de la température de l'air interne dans le moule, et la courbe en trait fin l'évolution de la température du moule. Sur cette figure les références « I1 », « I2 » et « I3 » représentent respectivement les première, deuxième et troisième injections, et les zones hachurées, de gauche à droite, respectivement les durées de polymérisation de la première, deuxième et troisième couches. La zone pointillée représente quant à elle la durée de cristallisation. « RR » indique la chute de température subséquente au refroidissement rapide du moule.

Dans cet exemple, chaque couche de polymère a une épaisseur de 2 mm, et l'épaisseur totale est de 6 mm.

### Exemple 6 : Examen des enveloppes obtenues selon l'invention

Les premiers essais de rotomoulage réactif ont été réalisés avec des formulations développées pour des moulages par injection (RIM : Résine Injection Molding). Ces formulations présentaient l'avantage d'avoir des temps de réaction très courts (moins de 3 minutes pour cristalliser). Elles étaient cependant incompatibles avec le procédé de rotomoulage. Ainsi le polymère n'avait pas le temps de recouvrir tout le moule avant de se former et, a fortiori, de se figer (il faut se rappeler que l'on est bien en dessous de la température de fusion du polymère). Il en résultait une très forte hétérogénéité en épaisseur, avec des portions de parois très fines (quelques dixièmes de millimètre) et des bourrelets de plusieurs centimètres d'épaisseur.

Ainsi, la première partie du développement effectuée par les présents inventeurs a été de trouver des paramètres (composition et procédé) permettant de ralentir la polymérisation jusqu'à obtenir une homogénéité suffisante. De nombreuses difficultés se sont présentées du fait que tous les paramètres sont inter-dépendants : taux de catalyseur, taux d'activateur, température de moule, vitesse de rotation, durée, évolution de la viscosité, etc.

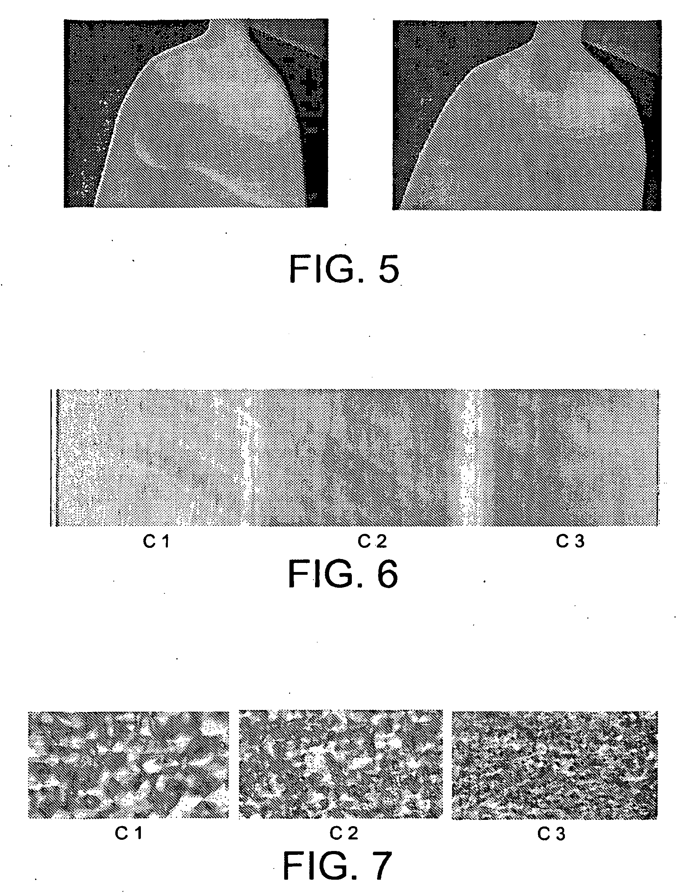

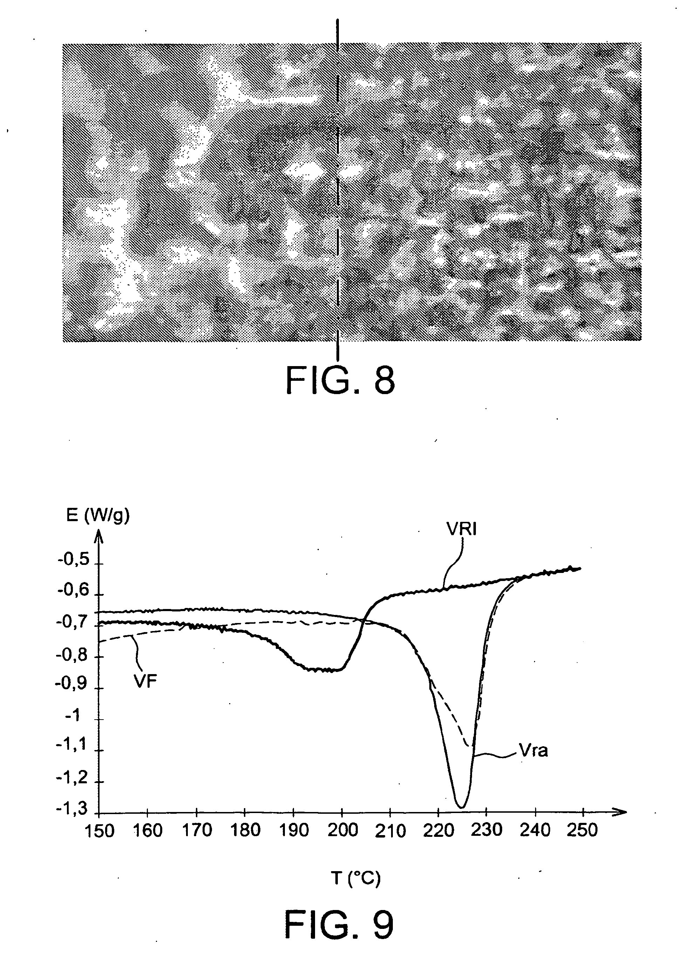

La figure 5 annexée permet d'ailleurs de comparer visuellement (photographies) des enveloppes de 3 L vues en coupe :
- à gauche pièce hétérogène obtenue avec une composition de caprolactame de l'art antérieur et un procédé de rotomoulage;
- à droite pièce homogène obtenue grâce à la composition de la présente invention avec le même procédé de rotomoulage.
   De toute évidence, la composition de la présente invention permet d'atteindre les objectifs recherchés.
   Des analyses de coupes ont été effectuées sur des enveloppes multicouches obtenues comme dans l'exemple 4. Les problèmes de collage que l'on peut rencontrer dans des multicouches « voie fondue » de l'art antérieur sont inexistants pour les enveloppes obtenues conformément à la présente invention car la polymérisation est continue d'une couche à une autre. Toutefois, il est possible de distinguer visuellement les couches les unes des autres en raison de leur différence de transparence.
   La photographie de la figure 6 représente une coupe du tricouche obtenu (3 x 2 mm) : côté moule à gauche, couche 1 (C1), couçhe 2 du milieu (C2) et la couche 3 côté air interne du rotomoule à droite (C3).
   La différence de transparence des trois couches peut être expliquée par la taille des sphérolites qui les compose. En effet ces dernières sont grandes pour la couche 1 (C1) (environ 20 µm), moyennes pour la couche 2 (C2) (environ 10 µm), et petites pour la couche 3 (C3) (environ 5 µm) comme on peut le constater sur la photographie de la figure 7. Ces différences sont imputables à la diminution du transfert thermique entre moule et le polymère au fur et à mesure que les couches se forment.
   Par ailleurs, on peut remarquer à partir de la photographie de la figure 8 annexée une zone de transition en termes de taille de sphérolites entre la couche 2 (à gauche - zone à sphérolites moyens) et la couche 3 (à droite - zone à sphérolites petits). Cette zone appartient à la couche 2 mais a été modifiée par l'injection de la couche 3. Cette interphase continue participe à la cohésion mécanique de l'ensemble puisque les chaînes macromoléculaires de chaque couche sont intimement liées et interpénétrées avec la ou les couches adjacentes.

### Exemple 7 : Propriétés des enveloppes obtenues à partir d'une composition de la présente invention

Dans les expérimentations de cet exemple :
- La composition de l'invention est celle de l'exemple 3.
- Le PA6 utilisé pour la voie fondue est le TECHNYL C217 (marque de commerce) de Rhodia Engineering Plastics (France).
- La composition sans additif est la même que celle de l'exemple 3, mais sans additif ε-caprolactone.

### A. Microstructure et cristallinité

Outre les températures de fusion et les taux de cristallinité, des essais de Calorimétrie Différentielle à Balayage (DSC) permettent de mettre en évidence diverses particularités du polymère formé : par exemple différentes phases cristallines, la présence de caprolactame non polymérisé, la reprise hydrique, une post-polymérisation, et de manière générale, l'état de polymérisation du PA6.

La figure 9 annexée représente un graphique regroupant les résultats d'analyses DSC sur PA6 rotomoulé par voie fondue de l'art antérieur (VF) ; sur PA6 rotomoulé obtenu par voie réactive avec une composition de l'art antérieur sans additif (Vra), et sur PA6 rotomoulé obtenue par voie réactive avec une composition de la présente invention (VRI) (trait gras).

On note tout d'abord que la température du pic de fusion du PA6 obtenu par voie réactive (sans additif) est (légèrement) plus basse que celle du pic de fusion du PA6 obtenu par voie fondue. Ceci montre que ce matériau possède des lamelles un peu moins épaisses, ce qui est favorable à la propriété barrière aux fluides, dont le gaz, et à la propriété mécanique (matière plus ductile).

L'additif utilisé selon la présente invention agit sur le monomère pendant la polymérisation. Il vient s'intégrer dans la macromolécule (polymère) en formant une sorte de copolymère séquencé, apportant un effet mécanique de souplesse inattendue. Cette modification de la molécule modifie la cristallisation et modifie donc les propriétés finales de l'enveloppe obtenue. Sur le plan pratique, l'additif 6 s'utilise avec l'activateur, qu'il consomme en partie. Très liquide à température ambiante il présente l'avantage de se mélanger très facilement avec le caprolactame et de pouvoir être utilisé à des taux supérieurs à 10% en poids. L'additif a été testé à des taux de 5%, 10% et 15% en poids, sans modification significative du cycle de chauffage et de la polymérisation (le ratio entre les autres composants n'ayant pas été modifié). En revanche l'aspect et les propriétés mécaniques ont été fortement et favorablement modifiés, ce qui était l'effet recherché.

Les mesures DSC montrent sur cette figure que les pièces obtenues avec la composition de la présente invention (trait gras) possèdent un pic de fusion à plus basse température (30°C en moins) dont l'endotherme est plus faible et plus étalé, signifiant que le polymère obtenu possède des plus petites lamelles cristallines. De plus le pic de fusion au deuxième chauffage se retrouve à la même position qu'au premier chauffage, ce qui confirme la modification importante de la chaîne moléculaire. Cette observation est un gage de stabilité du matériau et significatif d'une polymérisation complète. Ces mesures montrent une amélioration incontestable apportée grâce à la composition de la présente invention.

### B. Comportement mécanique en traction

Des essais de traction ont été réalisés selon la norme ISO 527 sur des éprouvettes haltères de type H2 (longueur utile de 25 mm) à une vitesse de traverse de 25 mm/min. Plusieurs conditions d'essais ont été testées : température ambiante sur éprouvettes non étuvées et températures de -40, -10, 20, 50 et 85°C sur éprouvettes étuvées.

Globalement, les PA6 anioniques obtenus à partir de la composition de l'invention ont une rigidité un peu plus importante que les PA6 hydrolytiques, car ils ont une masse moléculaire plus grande. En revanche l'allongement à rupture est variable selon le taux d'activateur.

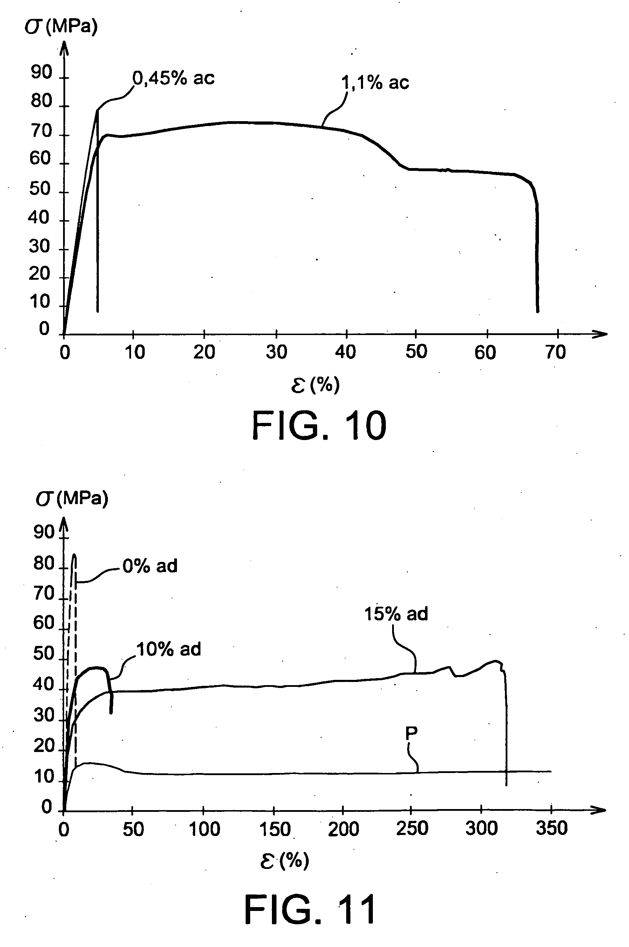

En effet, comme le montre la figure 10 annexée, l'allongement passe de 5% à 65% lorsque le taux d'activateur passe de 0,45% en poids (courbe « 0,45% ac » sur la figure 10) à 1,1% en poids (courbe « 1,1% ac » sur la figure 10). On peut expliquer cela par un allongement des chaînes à faible taux d'activateur, favorisant ainsi les jonctions entre chaque lamelle et les enchevêtrements de la phase amorphe. Des allongements supérieurs n'ont pu être obtenu (sans additifs) en raison de la grande difficulté à polymériser avec de si faibles taux d'activateur, dont la limite inférieure est 0,3% environ.

La température de transition vitreuse étant proche de 40°C, le comportement du PA6 varie peu de - 40°C à + 20°C. En revanche, à partir de 50°C, la souplesse et la ductilité augmentent fortement.

Sur le plan mécanique, les essais de traction représentés sur la figure 11 montrent de façon flagrante l'effet de l'additif dans la composition de la présente invention, en particulier à partir d'un ajout de 10% d'additif (courbe « 10% ad » sur la figure 11). Le module d'Young est divisé par 3 (de 2200 MPa à 700. MPa) en passant de 0% (courbe « 0% ad » sur la figure 11) à 15% d'additif (courbe « 15% ad » sur la figure 11), ce qui l'amène à une rigidité comparable à celle d'un Polyéthylène Haute Densité (courbe p).

L'allongement à rupture est lui aussi considérablement augmenté : passant de 10 à 300% d'allongement pour respectivement 0 et 15% d'additif 6. L'endommagement est de type ductile caractérisé par une striction très bien marquée. La rupture intervient après la phase de striction. De même, la contrainte au seuil d'écoulement est diminuée par deux environ. Ces mesures montrent une amélioration mécanique incontestable apportée grâce à la composition de la présente invention.

### C. Performance Barrière à l'Hydrogène Gazeux

Des mesures de perméation à l'hydrogène (27°C, 50 bars) ont été réalisées et regroupées sous forme de graphique sur la figure, 12 annexée.

Les premières mesures sur les voies réactives font état d'une meilleure imperméabilité des PA6 « voie réactive » que les PA6 « voie fondue » de l'art antérieur (facteur 2 environ) (non représenté).

Les lamelles plus petites et la distance entre celles-ci plus courtes sont les raisons de l'augmentation de la tortuosité du matériau.

Des essais réalisés à 7x 10⁷ Pa (700 bars) sur échantillons ont confirmé la bonne performance des PA6 obtenus par rotomoulage réactif à partir de la composition de la présente invention puisque le coefficient de perméation (Pe) est de l'ordre de 4x10⁻¹⁷ mol/(m.Pa.s), soit un coefficient inférieur d'un facteur de 5 à 10 environ à ce que demande les projets de normes actuels (ISO TC 197 et EIHP II) en terme de taux de fuite admissible pour les réservoirs (1 cm³/1/h) .

Des essais sur réservoirs complet (200x10⁵ Pa (200 bars), 27°C, Hydrogène) confirment les résultats obtenus sur ces échantillons.

### Exemple 8 : Fabrication d'un réservoir de type IV

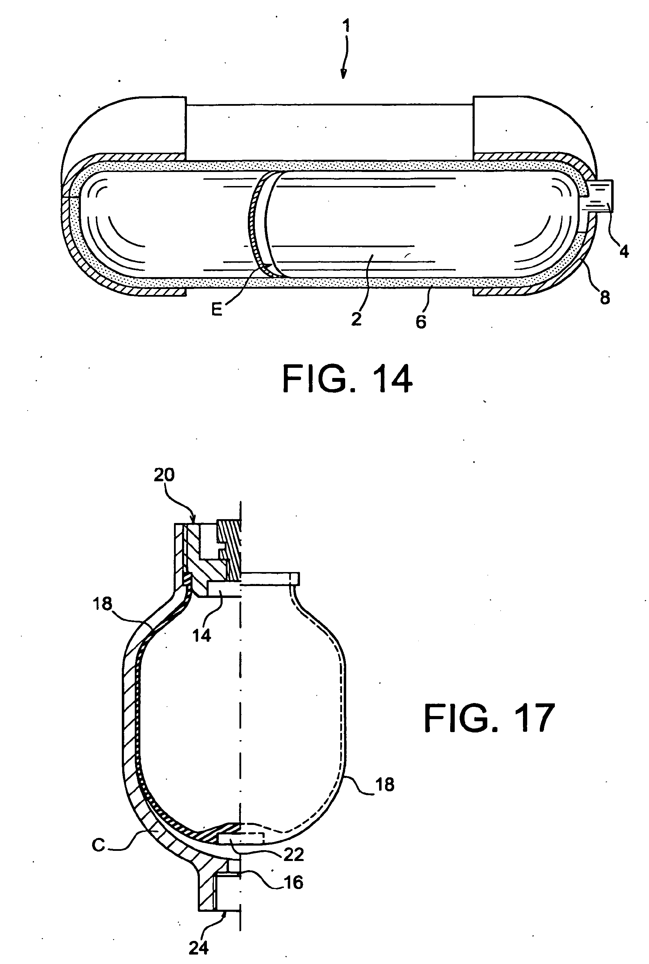

Le réservoir (1) fabriqué est représenté sur la figure 14 annexée. Dans cet exemple, l'enveloppe (E) fabriquée dans l'exemple 3, munie de son embase (4), est munie d'une structure (6) de renfort. Pour cela, des fibres de carbone préalablement imprégnées de résine époxy non réticulée sont enroulées autour de l'enveloppe maintenue par l'embase (la vessie sert de mandrin) suivant l'un des procédés décrits dans les documents [4], [5], [24] ou [25].

Quelques couches de fibres de verre imprégnées de résine époxyde non réticulée sont ensuite enroulées comme pour les fibres de carbone. Le réservoir bobiné est alors placé dans une étuve tournantes pour faire durcir la résine époxyde.

Une coque de protection (8) peut ensuite être disposée autour de l'enroulement filamentaire comme représenté en coupe sur la figure 1. Une valve/détendeur peut être vissée sur le réservoir, dans l'embase (non représenté).

Un réservoir de type IV est ainsi obtenu. Ce réservoir présente les spécifications d'étanchéité précitées.

### Exemple 9 : Post-traitement d'une vessie obtenue selon le procédé de l'invention

Une enveloppe fabriquée suivant le procédé de la présente invention, par exemple suivant le protocole de l'exemple 2, peut être soumise à un post-traitement tels que ceux cités dans la partie exposé de l'invention ci-dessus, afin d'améliorer ses propriétés d'étanchéité ainsi que ses propriétés chimique de surface interne et/ou externe.

Des exemples de post-traitement applicables à la vessie sont décrits dans les documents [26] et [27] de la liste annexée des références.

### Exemple 10 : Fabrication d'un accumulateur hydraulique

L'accumulateur hydraulique (10) fabriqué dans cet exemple est représenté sur la figure 17 annexée.

Dans cet exemple, on fabrique un réservoir de type IV comme dans l'exemple 8 sauf qu'il est muni de deux embases (14 et 16) qui permettent de mettre en place la connectique de l'accumulateur (comme dans l'exemple 4 ci-dessus).

Le corps (C) de l'accumulateur est donc constitué dudit réservoir de type IV muni de ses deux embases (14 et 16).

Pour le montage de l'accumulateur, on procède comme indiqué dans le document [37] de la liste annexée des références. On place une poche interne (18) souple en caoutchouc dans le réservoir de type IV, et on met en place la première connectique (20), à laquelle la poche est reliée de manière étanche, au niveau de l'embase (14). Une pastille anti-extrusion (22) est fixée sur la poche pour éviter qu'elle sorte du réservoir par extrusion par la deuxième connectique (24) lors de l'utilisation de l'accumulateur. Dans cet exemple, la pastille est en plastique vulcanisé.

La connectique (20) comprend une valve d'alimentation par laquelle on peut introduire un volume V₀ gaz inerte dans la poche souple (18) à une pression P₀ adaptée à l'utilisation de l'accumulateur. La poche peut ainsi être « gonflée » dans le réservoir.

On place ensuite la deuxième connectique (24) au niveau de l'embase (16) de manière à pouvoir introduire dans le réservoir, autour de la poche souple, un fluide à une pression P₁. Cette connectique est telle qu'elle peut être reliée à un tuyau de circulation d'un fluide.

Ainsi, lorsque l'accumulateur est relié au tuyau de circulation d'un fluide, le fluide pénètre dans l'accumulateur et la pression P₁ du fluide dans le tuyau est donc présente dans l'accumulateur autour de la poche souple (18). Quand la pression P₁ du circuit dépasse la pression de gonflage P₀ de la poche souple de l'accumulateur, ladite poche se contracte et le gaz se comprime, réduisant son volume à V₁. En augmentant encore la pression à P₂ (P₂ étant supérieure à P₁) , le volume de gaz dans l'enveloppe souple est d'avantage comprimé et passe à un volume V₂. L'accumulateur dispose alors d'un volume de fluide sous pression de V = V¹ - V₂.

Un accumulateur hydraulique fonctionnel est ainsi obtenu. Cet accumulateur présente les spécifications d'étanchéité citées dans les exemples ci-dessus. Cet accumulateur a une capacité de 3,5 litres, et une pression de service de 2,5x10⁷ Pa (250 bars). Le rapport pression maximale (P₂)- / pression au repos (P₀) est de 4:1 dans cet exemple. Il peut bien entendu être différent dans d'autres cas.

Une coque de protection peut bien entendu être disposée autour de l'enroulement filamentaire comme dans l'exemple 8 et comme représenté en coupe sur la figure 14 (non représentée sur la figure 17).

### Listes des références

- [1]: FR-A-2 813 232 : Procédé de fabrication d'une pièce de révolution par rotomoulage et pièce obtenue.
- [2]: FR-A-2 813 235 : Structure et réservoir thermoplastique.
- [3]: US-A-4 927 038 : "Container for high pressure gases".
- [4]: US-A-4 925 044 : "Fluid tank and method of manufacturing it".
- [5]: US-A-5 499 739 : "Thermoplastic liner for and method of overwrapping high pressure vessels".
- [6]: US-A-6 554 939 : "Container and method of forming the container".
- [7]: US-A-5 568 878 : "Filament wound pressure vessel having a reinforced access opening".
- [8]: US-A-6 660 214 : "Pressure vessel manufacture method".
- [9]: http://www.rotomoulage.org
- [10]: "Next Generation Hydrogen Tankage", Laurence Livermore National Laboratory, Proceedings of the 2001 U.S. DOE Hydrogen Program Review.
- [11]: "Hydrogen Composite Tank Program", Quantum Technologies, Proceedings of the 2002 U.S. DOE Hydrogen Program Review.
- [12]: "Hydrogen Composite Tank Project", Quantum Fuel System Technologies, FY 2003, Progress Report.
- [13]: "Development of a Compressed Hydrogen Gas Integrated Storage System (CH₂-ISS) for Fuel Cell Vehicles", University Applied Physics Laboratory, FY 2003 Progress Report.
- [14]: "Next Generation Hydrogen Storage", Laurence Livermore National Laboratory, FY 2003 Progress Report.
- [15]: "Low Permeation Liner for Hydrogen Gas Storage Tanks", Idaho National Engineering & Environmental Laboratory, FY 2003 Progress Report.
- [16]: US-3,275,733 : "Process for the production of hollow articles of polymerized lactams".
- [17]: "Anionic Polymerization, Principles and Practical Applications", Henry L. HSIEH et Roderick P. QUIRCK, 1996, Editeur : Marcel Deker, Inc., New York
- [18]: Revue "Oil & Gas Science and Technology", Revue de l'Institut Français du Pétrole, Numéro spécial 2001, May-June, vol.56, n°3, pp. 215-312, t Editions Technip, 27, rue Ginoux, 75737 Paris Cedex 15
- [19]: Livre, "Introduction des Coques Minces",' Patrick Muller, Claire Ossadzow, Hermes Science Publications, Paris, 1999. Hermes Science Publications, 8 quai du Marché-Neuf, 75004 Paris, France
- [20]: Livre, "Formulaire Technique", Kurt Gleck, 10ème Edition, spt., 1997, Dunod.
- [21]: "Etude de la nature de couches barrières à l'oxygène réalisées par plasma basse fréquence en fonction des conditions d'élaboration", Eric Bouvier, Université Paul Sabatier de Toulouse, soutenue le 14/09/99, n° d'ordre 3457.
- [22]: "Trends in Barrier Design", May 1991, Journal Packaging, Japan
- [23]: US-A-5,538,680 : "Method of molding a polar boss to a composite pressure vessel".
- [24]: US-A-6,171,423 : "Method for fabricating composite pressure vessels".
- [25]: US-A-5,577,630 "Composite conformable pressure vessel".
- [26]: US-A-6,328,805 : "Equipment for processing using a low-pressure plasma having an improved vacuum circuit".
- [27]: US-A-5,902,643 : "Multilayer packaging material having aminoepoxy gas barrier coating".
- [28]: FR-A-2 114 550.
- [29]: FR-A-2 120 161.
- [30]: FR-A-2 125 347.
- [31]: FR-A-1 519 947.
- [32]: GB-A-1 044 205.
- [33]: Les Techniques de l'Ingénieur, A767, « Appareillage de contrôle des fluides dans les tuyauteries », de Jean Sutter.
- [34]: Site Internet http://www.saip.it.
- [35]: Site Internet http://www.Accumulators.com.
- [36]: Rotomoulage de pièces en matière thermoplastique, Abbas Tcharkhtchi, Les techniques de l'Ingénieur, AM 3 706, pages 1 à 15, et figure 7 (source AFR http:www.rotomoulage.org).
- [37]: US Patent Application n°20040065374 (PCT/EP02/02750), Baltes Herbert ; et al., « Hydropneumatic accumulator ».

## Revendications

1. Composition comprenant en % en poids par rapport au poids total de la composition :
- de 70 à 90% d'un monomère ε-caprolactame de formule (I) ;
- de 0,1 à 1% d'un activateur ε-caprolactame de formule (II), dans laquelle R est choisi dans le groupe comprenant CₙH₂ₙ₊₂, n étant un nombre entier choisi de 1 à 10 ; -OH ; -OCₙH₂ₙ₊₂, n étant un nombre entier choisi de 1 à 10 ; et -NHR' où R' est soit CₙH₂ₙ₊₂ , n étant un nombre entier choisi de 1 à 10, soit une fonction amine ;
- de 2 à 6% d'un catalyseur ε-caprolactame de formule (III), dans laquelle X est choisi dans le groupe comprenant MgBr, MgI, Li et Na ; et
- de 10 à 20% d'un additif ε-caprolactone de formule (IV) ;
dans laquelle les formules (I), (II), (III) et (IV) sont les suivantes :

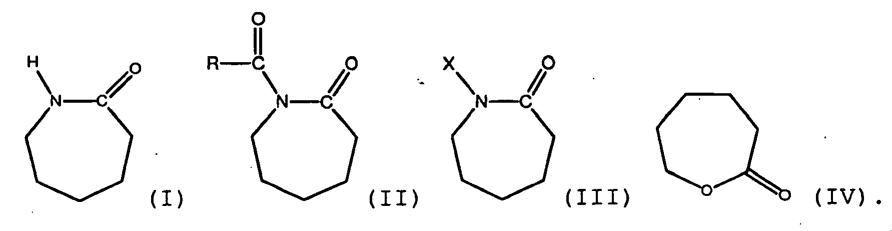

2. Composition selon la revendication 1, comprenant en % en poids :
- de 80 à 81% dudit monomère ε-caprolactame,
- de 0,3 à 0,5% dudit activateur ε-caprolactame,
- de 3,5 à 4,5% dudit catalyseur ε-caprolactame, et
- de 14 à 16% dudit additif ε-caprolactone.

3. Composition selon la revendication 1, comprenant en % en poids :
- 80,6% dudit monomère ε-caprolactame,
- 0,4% dudit activateur ε-caprolactame,
- 4% dudit catalyseur ε-caprolactame, et
- 15% dudit additif ε-caprolactone.

4. Utilisation d'une composition selon l'une quelconque des revendications 1 à 3 dans la fabrication d'un élément d'étanchéité.

5. Utilisation selon la revendication 4, dans laquelle l'élément d'étanchéité est une enveloppe d'étanchéité.

6. Utilisation selon la revendication 5, dans laquelle la fabrication de l'enveloppe d'étanchéité est réalisée par rotomoulage.

7. Utilisation selon la revendication 5 ou 6, dans laquelle l'enveloppe d'étanchéité est une enveloppe d'étanchéité aux fluides sous pression.

8. Utilisation selon la revendication 5 ou 6, dans laquelle l'enveloppe d'étanchéité est une enveloppe d'étanchéité aux gaz d'un réservoir composite de type IV.

9. Procédé de fabrication d'une enveloppe d'étanchéité, ledit procédé comprenant les étapes suivantes :
(a) préparation et introduction d'une composition selon l'une quelconque des revendications 1 à 3 dans un rotomoule ;
(b) mise en rotation du rotomoule et polymérisation anionique du monomère ε-caprolactame de ladite composition en polycaprolactame, ladite composition étant chauffée à une température de polymérisation supérieure ou égale à la température de fusion de l'ε-caprolactame et inférieure à la température de fusion dudit polycaprolactame, de manière à former ladite enveloppe par rotomoulage couplé à une polymérisation sans fusion du polycaprolactame obtenu ;
(c) cristallisation du polycaprolactame obtenu ; et
(d) démoulage de l'enveloppe de polycaprolactame obtenue.

10. Procédé selon la revendication 9, dans lequel, dans l'étape (a), on purge au moins le monomère ε-caprolactame et le catalyseur, ε-caprolactame de ladite composition et/ou la composition, au moyen d'un gaz inerte sec.

11. Procédé selon la revendication 9, dans lequel, dans l'étape (a), on prépare deux pré-mélanges de ladite composition, l'un contenant le monomère, l'activateur et l'additif, et l'autre le monomère et le catalyseur, ces deux pré-mélanges étant mélangés ensemble juste avant, lors de leur introduction ou dans le rotomoule pour former ladite composition.

12. Procédé selon la revendication 9, dans lequel, dans l'étape (a), la composition est en outre préchauffée à une température de préchauffage supérieure ou égale à la température de fusion dudit monomère et inférieure à ladite température de polymérisation, avant ou après l'étape (b) d'introduction, de manière faire fondre la composition et l'homogénéiser.

13. Procédé selon la revendication 9, dans lequel le moule est purgé au moyen d'un gaz inerte sec lors de la mise en oeuvre de l'étape (c).

14. Procédé selon la revendication 9, dans lequel le moule est mis en rotation suivant deux axes, de manière à ce que la polymérisation se fasse sur toute la surface interne du moule prévue pour former l'enveloppe et conformément à celle-ci.

15. Procédé selon la revendication 9, dans lequel l'étape consistant à polymériser le monomère ε-caprolactame en polycaprolactame dans le moule en rotation est réalisée à une température de polymérisation de 150 à 200°C.

16. Procédé selon la revendication 9, dans lequel on répète les étapes (a)+(b)+(c) pour former une enveloppe d'étanchéité à plusieurs couches de polycaprolactame(s) identiques ou différentes, en épaisseur et/ou en composition.

17. Procédé selon l'une quelconque des revendications 9 à 16, dans lequel on fixe une embase de réservoir à l'intérieur du rotomoule avant de mettre en oeuvre l'étape (c) de manière à ce que l'embase de réservoir soit incorporée à l'enveloppe d'étanchéité lors de la polymérisation.

18. Réservoir (1) composite de stockage d'un fluide, ledit réservoir comprenant une enveloppe (2) d'étanchéité susceptible d'être obtenue par mise en oeuvre d'un procédé selon l'une quelconque des revendications 9 à 16.

19. Réservoir composite selon la revendication 17, ledit réservoir comprenant dans cet ordre, de l'intérieur du réservoir vers l'extérieur de celui-ci, au moins :
- ladite enveloppe (2) d'étanchéité,
- au moins une embase (4) métallique, et
- un renfort mécanique (6) externe de l'enveloppe.

20. Réservoir composite selon la revendication 19, ladite, au moins une, embase métallique est une embase en aluminium ou en acier, et ledit renfort mécanique externe est un enroulement filamentaire constitué de fibres de carbone et de résine thermodurcissable.

21. Réservoir selon la revendication 19 ou 20, dans lequel le fluide est un gaz sous pression.

22. Réservoir selon la revendication 19 ou 20, dans lequel l'enveloppe a une épaisseur telle qu'elle supporte une pression de service du réservoir comprise entre 10⁷ et 10⁸ Pa.

23. Réservoir selon la revendication 19 ou 20, ledit réservoir étant un réservoir de type IV.

24. Accumulateur hydraulique comprenant une enveloppe d'étanchéité susceptible d'être obtenue par mise en oeuvre d'un procédé selon l'une quelconque des revendications 9 à 16.

## Claims

1. Composition comprising as a % by weight with reference to the total weight of the composition:
- from 70 to 90% of an ε-caprolactam monomer according to formula (I);
- from 0.1 to 1% of an ε-caprolactam activator according to formula (II), wherein R is selected in the group comprising CₙH₂ₙ+₂, n being a whole number selected from 1 to 10; -OH; -OCₙH₂ₙ₊₂, n being a whole number selected from 1 to 10; and -NHR' where R' is either CₙH₂ₙ₊₂, n being a whole number selected from 1 to 10, or an amine function;
- from 2 to 6% of an ε-caprolactam catalyst according to formula (III), wherein X is selected in the group comprising MgBr, MgI, Li and Na; and
- from 10 to 20% of an ε-caprolactone additive according to formula (IV);
wherein the formulas (I), (II), (III) and (IV) are as follows:

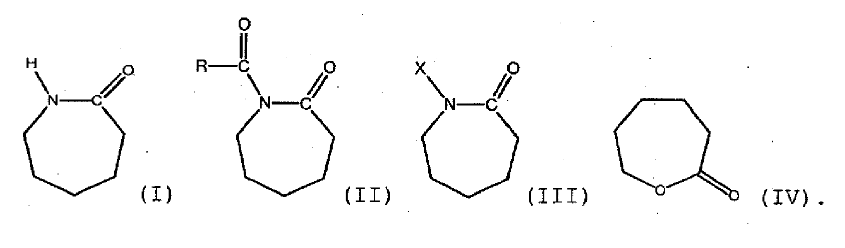

2. Composition according to claim 1, comprising as a % by weight:
- from 80 to 81% of said ε-caprolactam monomer,
- from 0.3 to 0.5% of said ε-caprolactam activator,
- from 3.5 to 4.5% of said ε-caprolactam catalyst, and
- from 14 to 16% of said ε-caprolactone additive.

3. Composition according to claim 1, comprising as a % by weight:
- 80.6% of said ε-caprolactam monomer,
- 0.4% of said ε-caprolactam activator,
- 4% of said ε-caprolactam catalyst, and
- 15% of said ε-caprolactone additive.

4. Use of a composition according to any of claims 1 to 3 in the manufacture of a sealing element.

5. Use according to claim 4, wherein said sealing element is a sealing envelope.

6. Use according to claim 5, wherein the manufacture of the sealing envelope is performed by means of rotational moulding.

7. Use according to claim 5 or 6, wherein the sealing envelope is a pressurised fluid sealing envelope.

8. Use according to claim 5 or 6, wherein the sealing envelope is a gas sealing envelope of a type IV composite tank.

9. Method to manufacture a sealing envelope, said method comprising the following steps:
(a) preparation and introduction of a composition according to any one of claims 1 to 3 into a rotational mould;
(b) rotation of the rotational mould and anionic polymerisation of the ε-caprolactam monomer of said composition into polycaprolactam, said composition being heated at a polymerisation temperature greater than or equal to the melting point of ε-caprolactam and less than the melting point of said polycaprolactam, so as to form said envelope by means of rotational moulding combined with polymerisation without melting of the polycaprolactam obtained;
(c) crystallisation of the polycaprolactam obtained; and
(d) release of the polycaprolactam envelope obtained from the mould.

10. Method according to claim 9, wherein, in step (a), at least the ε-caprolactam monomer and the ε-caprolactam catalyst of said composition and/or the composition is/are purged, by means of a dry inert gas.

11. Method according to claim 9, wherein, in step (a), two pre-mixtures of said composition are prepared, one containing the monomer, the activator and the additive, and the other the monomer and the catalyst, both pre-mixtures being mixed together just before, at the time of the introduction thereof or in the rotational mould to form said composition.

12. Method according to claim 9, wherein, in step (a), the composition is also preheated to a preheating temperature greater than or equal to the melting point of said monomer and less than said polymerisation temperature, before or after the introduction step (b), so as to melt and homogenise the composition.

13. Method according to claim 9, wherein the mould is purged by means of a dry inert gas during the implementation of step (c).

14. Method according to claim 9, wherein the mould is rotated along two axes, such that the polymerisation is carried out on the entire inner surface of the mould provided to form the envelope and conformal to said surface.

15. Method according to claim 9, wherein the step consisting of polymerising the ε-caprolactam monomer into polycaprolactam in the mould in rotation is carried out at a polymerisation temperature from 150 to 200°C.

16. Method according to claim 9, wherein steps (a)+(b)+(c) are repeated to form a sealing envelope with several polycaprolactam layers, said layers being identical or different, in terms of thickness and/or composition.

17. Method according to any one of claims 9 to 16, wherein a tank socket is attached inside the rotational mould before implementing step (c) such that the tank socket is incorporated in the sealing envelope during the polymerisation.

18. Composite fluid storage tank (1), said tank comprising a sealing envelope (2) obtainable by implementing a method according to any one of claims 9 to 16.

19. Composite tank according to claim 17, said tank comprising in this order, from the inside of the tank to the outside thereof, at least:
- said sealing envelope (2),
- at least one metal socket (4), and
- an external mechanical reinforcement (6) of the envelope.

20. Composite tank according to claim 19, said, at least one, metal socket is an aluminium or steel socket, and said external mechanical reinforcement is a filament winding consisting of carbon fibres and thermosetting resin.

21. Tank according to claim 19 or 20, wherein the fluid is a pressurised gas.

22. Tank according to claim 19 or 20, wherein the lining has a thickness such that it withstands a working pressure of the tank between 10⁷ and 10⁸ Pa.

23. Tank according to claim 19 or 20, said tank being a type IV tank.

24. Hydraulic accumulator comprising a sealing envelope obtainable by implementing a method according to any one of claims 9 to 16.

## Patentansprüche

1. Zusammensetzung umfassend in Gew.-% bezogen auf das Gesamtgewicht der Zusammensetzung:
- 70 bis 90 % eines ε-Caprolactammonomers der Formel (I);
- 0,1 bis 1 % eines ε-Caprolactamaktivators der Formel (II), worin R aus der Gruppe ausgewählt ist, umfassend CₙH₂ₙ₊₂, wobei n eine aus 1 bis 10 ausgewählte ganze Zahl ist; -OH; -OCₙH₂ₙ₊₂, wobei n eine aus 1 bis 10 ausgewählte ganze Zahl ist, und
- NHR', worin R' entweder CₙH₂ₙ₊₂, wobei n eine aus 1 bis 10 ganze Zahl ist, oder eine Aminfunktion ist;
- 2 bis 6 % eines ε-Caprolactamkatalysators der Formel (III), worin X aus der MgBr, MgI, Li und Na umfassenden Gruppe ausgewählt ist, und
- 10 bis 20 % eines ε-Caprolactonadditivs der Formel (IV), wobei die Formeln (I), (II), (III) und (IV) die folgenden sind:

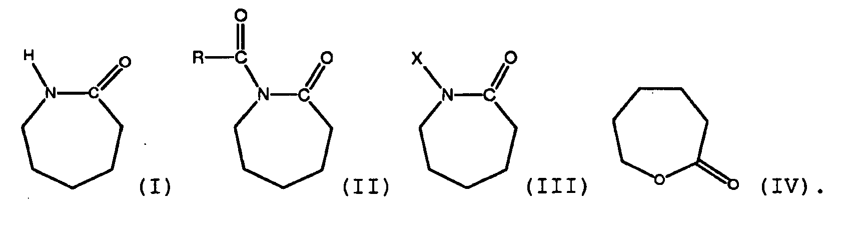

2. Zusammensetzung gemäß Anspruch 1, umfassend in Gew.-%:
- 80 bis 81 % des ε-Caprolactammonomers,
- 0,3 bis 0,5 % des ε-Caprolactamaktivators,
- 3,5 bis 4,5 % des ε-Caprolactamkatalysators und
- 14 bis 16 % des ε-Caprolactonadditivs.

3. Zusammensetzung gemäß Anspruch 1, umfassend in Gew.-%:
- 80,6 % des ε-Caprolactammonomers,
- 0,4 % des ε-Caprolactamaktivators,
- 4 % des ε-Caprolactamkatalysators und
- 15 % des ε-Caprolactonadditivs.

4. Verwendung einer Zusammensetzung gemäß einem der Ansprüche 1 bis 3 bei der Herstellung eines Dichtungselements.

5. Verwendung gemäß Anspruch 4, bei der das Dichtungselement ein Dichtungsmantel ist.

6. Verwendung gemäß Anspruch 5, bei der die Herstellung des Dichtungsmantels durch Rotationsformen durchgeführt wird.

7. Verwendung gemäß Anspruch 5 oder 6, bei der der Dichtungsmantel ein Dichtungsmantel für Fluide unter Druck ist.

8. Verwendung gemäß Anspruch 5 oder 6, bei der der Dichtungsmantel ein Dichtungsmantel für das Gas eines Verbundbehälters des Typs IV ist.

9. Verfahren zur Herstellung eines Dichtungsmantels, wobei das Verfahren die folgenden Schritte umfasst:
(a) Herstellung und Einbringen einer Zusammensetzung gemäß einem der Ansprüche 1 bis 3 in einen Rotationsformer;
(b) Versetzen des Rotationsformers in Rotation und anionische Polymerisation des ε-Caprolactammonomers der Zusammensetzung zu Polycaprolactam, wobei die Zusammensetzung auf eine Polymerisationstemperatur über oder gleich der Schmelztemperatur des ε-Caprolactams und unter der Schmelztemperatur des Polycaprolactams erhitzt wird, um so durch Rotationsformen, das mit einer Polymerisation ohne Schmelzen des erhaltenen Polycaprolactams gekoppelt ist, den Mantel zu bilden;
(c) Kristallisation des erhaltenen Polycaprolactams und
(d) Aus-der-Form-Nehmen der erhaltenen Polycaprolactamhülle.

10. Verfahren gemäß Anspruch 9, bei dem in Schritt (a) wenigstens das ε-Caprolactammonomer und der ε-Caprolactamkatalysator der Zusammensetzung und/oder die Zusammensetzung mittels eines trockenen Inertgases ausgeblasen werden.

11. Verfahren gemäß Anspruch 9, bei dem in Schritt (a) zwei Vormischungen der Zusammensetzung hergestellt werden, wobei die eine das Monomer, den Aktivator und das Additiv und die andere das Monomer und den Katalysator enthält und die beiden Vormischungen kurz vor ihrem Einbringen in den Rotationsformer, bei ihrem Einbringen, oder in dem Rotationsformer, zum Bilden der Zusammensetzung zusammengemischt werden.

12. Verfahren gemäß Anspruch 9, bei dem in Schritt (a) die Zusammensetzung außerdem auf eine Vorerhitzungstemperatur über oder gleich der Schmelztemperatur des Monomers und unter der Polymerisationstemperatur vor oder nach dem Einführungsschritt (b) vorerhitzt wird, um die Zusammensetzung schmelzen und homogenisieren zu lassen.

13. Verfahren gemäß Anspruch 9, bei dem die Form während des Ausführens des Schritts (c) mittels eines trockenen Inertgasstroms ausgeblasen wird.

14. Verfahren gemäß Anspruch 9, bei dem die Form um zwei Achsen in Rotation versetzt wird, damit die Polymerisation auf der gesamten inneren Oberfläche der zum Bilden des Mantels vorgesehenen Form und dieser entsprechend erfolgt.

15. Verfahren gemäß Anspruch 9, bei dem der aus dem Polymerisieren des ε-Caprolactammonomers zu Polycaprolactam in der rotierenden Form bestehende Schritt bei einer Polymerisationstemperatur von 150 bis 200 °C durchgeführt wird.

16. Verfahren gemäß Anspruch 9, bei dem die Schritte (a) + (b) + (c) wiederholt werden, um einen Dichtungsmantel mit mehreren Polycaprolactamschichten identischer oder unterschiedlicher Dicke und/oder Zusammensetzung zu Bilden.

17. Verfahren gemäß einem der Ansprüche 9 bis 16, bei dem vor dem Ausführen des Schritts (c) im Inneren des Rotationsformers ein Behälterfuß so befestigt wird, dass der Behälterfuß bei der Polymerisation in den Dichtungsmantel integriert wird.

18. Verbundbehälter (1) zur Lagerung eines Fluids, wobei der Behälter einen Dichtungsmantel (2) umfasst, der durch Ausführen eines Verfahrens gemäß einem der Ansprüche 9 bis 16 erhalten werden kann.

19. Verbundbehälter gemäß Anspruch 17, wobei der Behälter in dieser Reihenfolge vom Behälterinneren bis zu dessen Äußerem wenigstens:
- den Dichtungsmantel (2),
- wenigstens einen Metallfuß (4) und
- eine mechanische Verstärkung (6) außerhalb des Mantels umfasst.

20. Verbundbehälter gemäß Anspruch 19, wobei der wenigstens eine Metallfuß ein Fuß aus Aluminium oder aus Stahl ist und die äußere mechanische Verstärkung eine Faserwicklung ist, die sich aus Kohlefasern und wärmehärtbarem Harz zusammensetzt.

21. Behälter gemäß Anspruch 19 oder 20, bei dem das Fluid ein unter Druck befindliches Gas ist.

22. Behälter gemäß Anspruch 19 oder 20, bei dem der Mantel eine solche Dicke aufweist, dass er einem Behälterbetriebsdruck zwischen 10⁷ und 10⁸ Pa standhält.

23. Behälter gemäß Anspruch 19 oder 20, wobei der Behälter ein Behälter des Typs IV ist.

24. Hydraulikspeicher umfassend einen Dichtungsmantel, der durch Ausführen eines Verfahrens gemäß einem der Ansprüche 9 bis 16 erhalten werden kann.
